# EUROPEAN PATENT APPLICATION

(11) **EP 1 920 802 A2**
(43) Date of publication of application: **14.05.2008**
(21) Application number: 07023844.9
(22) Date of filing: 06.09.2006
(51) Int. Cl.: A63F 13/08

(54) **Gaming machine**

(30) Priority: 14.09.2005 JP 2005267715; 14.09.2005 JP 2005267716; 28.09.2005 JP 2005281970
(62) Divisional of application: 06018678.0
(71) Applicant: Aruze Corporation, Tokyo 135-0063 (JP)
(72) Inventor: Okada, Kazuo, Koto-ku, Tokyo 135-0063 (JP)
(74) Representative: HOFFMANN EITLE

(57) **Abstract**

A game machine has a display means connected so as to freely enable storage within a seat on which a player sits.

The game machine has a display means for showing game images generated according to a game program and player input, an input reception means for receiving input from the player, a control means for executing the game program according to predetermined external input, including input from the input reception means, a seat part for enabling the player to sit, a storage part which is formed in said seat part, for storing said display means, and a connection rod for connecting the display means to the storage part such as to freely enable storage thereof, of which one end is fixed to the seat part and the other end is connected to the display means.

## Description

### FIELD OF THE INVENTION

The present invention relates to a game machine such as an arcade game placed in an arcade and the like.

### RELATED ART

Conventionally, multi-player-type game machines for commercial use, wherein numerous players participate, commonly referred to as multi-player game machines, are known. In recent years, there has been a horse-racing game machine as such a multi-player game machine. A multi-player game machine such as this includes, for example, a main game machine body to which a large main display means is provided and a plurality of terminal devices to which sub-display parts which are attached to the main game machine body are provided (Patent Reference 1).

These plural terminal devices are provided with seats, respectively, which seat the players, and face the main display part. In this terminal device, each player sits in the seat and performs various operations while watching the sub-display part mounted on the seat.

In this multi-player game machine, the race horses and the odds are shown in the main display part and the sub-display part. Each player selects an arbitrary race horse among the race horses shown and bets medals. Then, racing is performed by these race horses in the main display part and medals are paid out to each player according to the results, based on odds set beforehand.

In a multi-player game machine such as this, each terminal device is connected to the main game machine body by communication cables, respectively. By performing bidirectional communication via these communication cables, information necessary for the game is exchanged (refer to Patent Reference 1).

Incidentally, in a communication game machine, which is a type of a multi-player game machine such as this, seats which are higher in quality than conventional seats are used such that players do not become tired, even when playing for long periods of time. In addition, in a communication game in which the main content of the game is to bet medals on a horse-racing game shown on the main screen and pay out medals based on the odds set by the gaming device, presenting a high-class casino-like atmosphere by giving the seats an expensive appearance is proposed.

Patent Reference 1: Japanese Unexamined Patent Application Laid-Open Publication (Heisei) 8-206355

### DISCLOSURE OF THE INVENTION

### SUMMARY OF THE INVENTION

However, the following problems exist in the foregoing multi-player game machine.

When seeking further improvement in functionality and a sense of luxury in a terminal device used in a multi-player game such as this, for example, a sub-display part which can change positions according to the position of the player can be provided for each terminal device. Here, the sub-display part can preferably be moved to a position enabling viewing by the player when the game begins and can be stored into the seat such that the player can sit down smoothly.

In addition, it is preferable that, in the foregoing, the sub-display part automatically move from a state of being stored within the seat to a state enabling viewing by the player, based on predetermined conditions such as the player being seated, because the sense of luxury is further enhanced.

In addition, it is preferable that, in the foregoing, a means for holding the sub-display part which has been moved to a state enabling viewing by the player, and for preventing vibrations and swaying of the sub-display part is provided, because usability is further improved.

An object of the present invention is to provide a new game machine wherein a display part is connected such as to freely enable storage within a seat on which the player sits, in light of the foregoing issues.

### MEANS USED TO SOLVE THE ABOVE-MENTIONED PROBLEMS

Furthermore, another object of the present invention is to provide a game machine having a display part which automatically moves to a state enabling viewing by the player from a stored state, when predetermined conditions are met.

Furthermore, another object of the present invention is to provide a game machine including a holding mechanism for suppressing vibrations and swaying generated in the display part, by holding the display part which has been moved to a state enabling viewing by the player.

The present invention provides a game machine such as that below, in order to overcome the foregoing problems.

In a first aspect of the present invention, a game machine include: a display means (for example, a sub-monitor 613, described hereafter) for showing game images generated according to a game program and player input; a seat part (for example, a terminal device 30, described hereafter) for enabling the player to sit; a storage part (for example, a sub-monitor storage part 62, described hereafter) which is formed in said seat part, for storing said display means; and a connection rod (for example, a first support arm 612 and a second support arm 611, described hereafter) for connecting the display means to the storage part so as to freely enable storage thereof.

According to the first aspect of the present invention, the display means is connected to the seat part by the connection rod so as to freely enable storage. Through this, for example, when a mechanism for driving the connection rod is provided, the game machine can be configured so that the display means is stored within the storage part when the game is not being played and the display means is moved to a position enabling viewing by the player when the game is played.

In a second aspect of the present invention, a game machine includes: a display means (for example, a sub-monitor 613, described hereafter) for showing game images generated according to a game program and player input; an input reception means (for example, a touch-panel part 613B and input operation part 72, described hereafter) for receiving input from the player; a control means (for example, a CPU 90, described hereafter) for executing a game program according to a predetermined external input, including input from the input reception means; a seat part (for example, a terminal device 30, described hereafter) for enabling the player to sit; a storage part (for example, a sub-monitor storage part 62, described hereafter) which is formed in the seat part, for storing the display means; and a connection rod (for example, a first support arm 612 and a second support arm 611, described hereafter) for connecting the display means to the storage part so as to freely enable storage thereof, of which one end is fixed to the seat part and the other end is connected to the display means; in which the control means enables the display means to show game images based on the status of the game run by the game program according to the predetermined external input.

According to the second aspect of the present invention, the display means is connected to the storage part so as to freely enable storage thereof by the connection rod, of which one end is fixed to the seat part and the other end is connected to the display means. Through this, for example, if a mechanism for driving the connection rod is provided, the game machine can be configured such that the display means is stored within the storage part when the game is not being played and the display means is moved to a position enabling viewing by the player when the game is played.

In addition, the game machine is controlled to enable the presentation of game images in the display means, based on the status of the game run by the game program. Through this, for example, the game machine can be configured so that game images are not shown in the display means when the game is not being played and the presentation of the game images can be allowed and the game image can be shown in the display means when the game is played. In this way, the display means can be moved to a state enabling viewing by the player and game images can be shown in the display means as well, based on the status of the game run by the game program.

In a third aspect of the present invention, a game machine includes: a display means (for example, a sub-monitor 613, described hereafter) for showing game images generated according to a game program and player input; an input reception means (for example, a touch-panel part 613B and input operation part 72, described hereafter) for receiving input from the player; a control means (for example, a CPU 90, described hereafter) for executing a game program according to a predetermined external input, including input from the input reception means; a seat part (for example, a terminal device 30, described hereafter) for enabling the player to sit; a storage part (for example, a sub-monitor storage part 62, described hereafter) which is formed in the seat part, for storing said display means; a connection rod (for example, a first support arm 612 and a second support arm 611, described hereafter) for connecting the display means to the storage part so as to freely enable storage thereof, of which one end is fixed to the seat part and the other end is connected to the display means; and a movement prohibition means (for example, a storage part cover 66, described hereafter) which prohibits the outward movement of the display means stored within the storage part and places the display means in a movement prohibited state; in which the control means enables the movement prohibition means to release the display means from a movement prohibited state, based on the status of the game run by the game program according to the predetermined external input.

According to the third aspect of the present invention, the display means is connected to the storage part so as to freely enable storage thereof by the connection rod, of which one end is fixed to the seat part and the other end is connected to the display means. Through this, for example, if a mechanism for driving the connection rod is provided, the game machine can be configured such that the display means is stored to the storage part when the game is not being played and the display means is moved to a position enabling viewing by the player when the game is played.

In addition, the movement prohibition means is controlled to release the display means from a movement prohibited state, based on the status of the game run by the game program. Through this, for example, the game machine can be configured so as to place the display means in a movement prohibited state to prevent movement from the storage part when the game is not being played and release the display means from the movement prohibited state and enable the display means to be moved outward from the storage part when the game is played. In this way, the movement prohibited state of the display means can be released and the display means can be moved to a state enabling viewing by the player, based on the status of the game run by the game program. In addition, in this way, the display means can be placed in a state of being stored within the storage part, prohibiting outward movement thereof, when the game is not played, thereby preventing damage and the like due to mischievous children and the like.

In a fourth aspect of the present invention, a game machine according to the second or third aspect of the present invention has an input reception means (for example, input operation part 72, described hereafter) is provided in said display means (for example, a sub-monitor 613, described hereafter) as a touch panel part (for example, a touch-panel part 613B, described hereafter), and the connection rod (for example, a first support arm 612 and a second support arm 611, described hereafter) includes a pressing force reduction means (for example, a biasing part 663 and a connection rod sliding mechanism 665, described hereafter) for clearing the display means in the pressing direction when a pressing force stronger than a predetermined pressing force is applied to the touch-panel part.

According to the fourth aspect of the present invention, a pressing force reduction means for clearing the display means in a pressing direction is provided. Through this, for example, if the pressing force applied to the touch-panel part exceeds the predetermined strength, the display means is cleared in the pressing direction, and thus, damage to the display means, the connection rod and the like can be prevented.

In a fifth aspect of the present invention, a game machine according to the fourth aspect of the present invention includes a pressing force reduction means having a sliding part (for example, a connection rod sliding mechanism 665, described hereafter) for sliding the connection rod (for example, a first support arm 612 and a second support arm 611, described hereafter) to the side away from the player and a biasing part (for example, a biasing part 663, described hereafter) for biasing the connection rod to the player-side.

According to the fifth aspect of the present invention, a sliding part for sliding the connection rod to the side away from the player and a biasing part for biasing the connection rod to the player-side are provided in the seat part. Through this, for example, if the player presses the touch-panel with an excessively strong force, the display means slides to the side away from the player and clears the pressing force, and thus, damage to the display means, the connection rod and the like can be prevented.

In a sixth aspect of the present invention, a game machine according to the fourth aspect of the present invention has a pressing force reduction means including a turning axis (for example, a turning axis 660, described hereafter) for supporting the display means (for example, a sub-monitor 613, described hereafter) to enable turning and a rotation biasing part (for example, a turn biasing part 661, described hereafter) for biasing the display means to turn in the direction opposite of the turning direction of the turning caused by the pressing force.

According to the sixth aspect of the present invention, a turning axis which supports the display means to enable turning and a rotation biasing part for biasing the display means to turn in the direction opposite of the turning direction of the turning caused by the pressing force are provided. Through this, for example, if the player press the touch-panel with an excessively strong force, the display means turns and clears the pressing force and, thus, damage to the display means, the connection rod and the like can be prevented.

In a seventh aspect of the present invention, a game machine which includes: a display means (for example, a sub-monitor 613, described hereafter) for showing game images generated according to a game program and player input; a seat part (for example, a terminal device 30, described hereafter) for enabling the player to sit; a storage part (for example, a sub-monitor storage part 62, described hereafter) which is formed in said seat part, for storing said display means; a connection rod (for example, a first support arm 612 and a second support arm 611, described hereafter) for connecting the display means to the storage part so as to freely enable storage thereof; and a connection rod driving means (for example, an extending and retracting driving part 615A, a turning driving part 616A, and a rotation driving part 617A described hereafter) for movement-controlling the display means via the connection rod; in which the connection rod driving means automatically moves the display means into a state enabling viewing by the player from a state of being stored within the storage part, by driving the connection rod in accordance with predetermined conditions having been met.

According to the seventh aspect of the present invention, the display means is connected to the seat part to freely enable storage within the storage part by the connection rod, and a connection rod driving means which drives the connection rod in accordance with predetermined conditions having been met is further provided. Through this, for example, the game machine can be configured so that the display means stored within the storage part is automatically moved to a position enabling viewing by the player, in accordance with predetermined conditions having been met, such as when an instruction for game start is received by an input reception means such as a game start switch and the like, described hereafter, or when a seating detector, described hereafter, detects that a player is seated.

In a eighth aspect of the present invention, a game machine includes a display means (for example, a sub-monitor 613, described hereafter) for showing game images generated according to a game program and player input, and a main body part in which an input reception means (for example, an input operation part 72, described hereafter) for receiving input from the player is provided, in which: a storage part (for example, a sub-monitor storage part 62, described hereafter) for storing the display means is formed in the main body part; the display means is provided to freely enable storage within the storage part via a connection device (for example, a connection device 600, described hereafter); the connection device comprises a connection rod (for example, a first support arm 612 and a second support arm, described hereafter), of which one end is fixed to the main body part and the other end is connected to the display means; a connection device driving means (for example, an extending and retracting driving part 615A, a turning driving part 616A, and a rotation driving part 617A, described hereafter) for storing the display means into the storage part when a game is not being played, and moving the display means to a predetermined position, into a state enabling play when playing, is connected to the connection device; a control means (for example, a CPU91, described hereafter) for enabling control of the connection device driving means is provided in the main body part; and when an instruction for moving the display means stored within the storage part is received by the input reception means, the control means controls the connection device driving means and moves the display means from the state of being stored within the storage part to the state enabling play.

According to the eighth aspect of the present invention, the display means is connected to a connection device, of which one end is fixed to the main body part, and a driving mechanism for driving the connection device is provided in the connection device. Through this, for example, the display means which is stored within the storage part during a normal state can be moved automatically to a state enabling play and viewing by the player. Through this, the player playing the game can enjoy the game and also experience a sense of luxury.

In addition, the display means is configured to move from a stored state to a state enabling play when an instruction for starting the game is received by the input reception means. Through this, for example, the display means can be configured to automatically move to a position enabling viewing by the player, when the game start switch is pressed. In this way, the player can sit down smoothly before the game begins and, at the same time, the player can experience not only a sense of luxury, but also satisfaction, because the display means moves automatically into a state enabling play, according to the will of the player and predetermined movements.

In a ninth aspect of the present invention, a game machine includes a display means (for example, a sub-monitor 613, described hereafter) for showing game images generated according to a game program and player input, and a main body part in which a seat (for example, seating part 52, described hereafter) for enabling the player to seat is provided, in which: a storage part (for example, a sub-monitor storage part 62, described hereafter) for storing the display means is formed in the main body part; the display means is provided to freely enable storage within the storage part via a connection device (for example, a connection device 600, described hereafter); the connection device comprises a connection rod (for example, a first support arm 612 and a second support arm, described hereafter), of which one end is fixed to the main body part and the other end is connected to the display means; a connection device driving means (for example, an extending and retracting driving part 615A, a turning driving part 616A, and a rotation driving part 617A, described hereafter) for storing the display means into the storage part, when a game is not being played and moving the display means to a predetermined position, into a state enabling play when playing, is connected to the connection device; a seating detection part (for example, a seating detector 525, described hereafter) for detecting that the player is seated on the seat and a control means (for example, a CPU91, described hereafter) for enabling control of the connection device driving means are provided in the main body part; and when the seating detection part detects that the player is seated, the control means controls the connection device driving means and moves the display means from the state of being stored within the storage part to the state enabling play.

According to the ninth aspect of the present invention, the display means is connected to the connection device, of which one end is fixed to the main body part, and in addition, a driving mechanism for driving the connection device is provided therein. Through this, for example, the display means stored within the storage part during a normal state can be moved automatically into a state enabling play and viewing by the player. Through this, the player playing the game can not only enjoy the game, but also experience a sense of luxury.

In addition, because the display means is configured so as to move from a stored state to a state enabling play when the seating of the player to the seat is detected, for example, the display means can be configured so as to move automatically to a state enabling viewing by the player. In this way, the player can sit down smoothly and, at the same time, the player can experience not only a sense of luxury, but also satisfaction, because the display means moves automatically into a state enabling play, according to the will and predetermined movements of the player.

In a tenth aspect of the present invention, a game machine includes a main game machine body (for example, a main game machine body 20, described hereafter), and a terminal device(for example, a terminal device 30, described hereafter), in which: the terminal device comprises a display means (for example, a sub-monitor 613, described hereafter) for showing game images generated according to a game program and player input, and a main body part in which an input reception means (for example, an input operation part 72, described hereafter) for receiving input from the player is provided; a storage part (for example, a sub-monitor storage part 61, described hereafter) for storing the display means is formed in the main body part; the display means is provided to freely enable storage within the storage part via a connection device (for example, a connection device 600, described hereafter); the connection device comprises a connection rod (for example, a first support arm 612 and a second support arm 611, described hereafter), of which one end is fixed to the main body part and the other end is connected to the display means; a connection device driving means (for example, an extending and retracting driving part 615A, a turning driving part 616A, and a rotation driving part 617A) for storing the display means into the storage part, when a game is not being played and moving the display means to a predetermined position, into a state enabling play when playing, is connected to the connection device; a control means (for example, a CPU 91, described hereafter) for enabling control of the connection device driving means is provided in the main body part; and when an instruction for moving the display means stored within the storage part is received by the input reception means, the control means controls the connection device driving means and moves the display means from the state of being stored within the storage part to the state enabling play.

According to the tenth aspect of the present invention, in a multi-player-type game machine wherein numerous players participate, such as a multiplayer game, the connection device, of which one end is fixed to the main body part of the terminal device, is connected to the display means and a connection device driving means for driving the connection device is provided in each terminal device. Through this, for example, the display means which is stored within the storage part during a normal state can be moved automatically to a state enabling play and viewing by the player. Through this, the player playing the game cannot only enjoy the game, but also experience a sense of luxury.

In addition, the display means is configured to be movement-controlled from a stored state to a state enabling play when an instruction for starting the game is received by the input reception means. Through this, for example, when the game start switch is pressed, the display means can be configured to move automatically to a position enabling viewing by the player. In this way, the player can sit down smoothly before the game begins, and at the same time, the display means is automatically movement-controlled to enter a state enabling play according to the will and predetermined movements of the player, and thus, the player can experience not only a sense of luxury, but also satisfaction.

In a eleventh aspect of the present invention, a game machine includes a main game machine body (for example, a main game machine body 20, described hereafter), and a terminal device (for example, a terminal device 30, described hereafter), in which: the terminal device comprises a display means for showing game images generated according to a game program and player input, and a main body part in which a seat (for example a seating part 52, described hereafter) for enabling the player to seat is provided; a storage part (for example, a sub-monitor storage part 61, described hereafter) for storing the display means is formed in the main body part; the display means is provided to freely enable storage within the storage part via a connection device (for example, a connection device 600, described hereafter); the connection device comprises a connection rod (for example, a first support arm 612 and a second support arm 611, described hereafter), of which one end is fixed to the main body part and the other end is connected to the display means; a connection device driving means (for example, an extending and retracting driving part 615A, a turning driving part 616A, and a rotation driving part 617A, described hereafter) for storing the display means into the storage part, when a game is not being played and moving the display means to a predetermined position, into a state enabling play when playing, is connected to the connection device; a seating detection part (for example, a seating detector 525, described hereafter) for detecting that the player is seated and a control means (for example, a CPU91) for enabling control of the connection driving mechanism are provided in the main body part; and the control means controls the connection device driving means when the seating detection part detects that the player is seated and moves the display means from the state of being stored within the storage part to the state enabling play.

According to the eleventh aspect of the present invention, in a multi-player-type game machine wherein numerous players participate, such as a multiplayer game, the connection device, of which one end is fixed to the main body part of the terminal device, is connected to the display means and a connection device driving means for driving the connection device is provided in each terminal device. Through this, for example, the display means which is stored within the storage part during a normal state can be moved automatically to a state enabling play and viewing by the player. Through this, the player playing the game cannot only enjoy the game, but also experience a sense of luxury.

In addition, the display means is configured to be movement-controlled from a stored state to a state enabling play when an instruction for starting the game is received by the input reception means. Through this, for example, when the game start switch is pressed, the display means can be configured to move automatically to a position enabling viewing by the player. Through this, the player can sit down smoothly before the game begins, and at the same time, the display means is automatically movement-controlled to enter a state enabling play according to the will and predetermined movements of the player, and thus, the player can experience not only a sense of luxury, but also satisfaction.

In a twelfth aspect of the present invention, a game machine according to the eighth or tenth aspect of the present invention has a the control means (for example, CPU 91, described hereafter) controls the connection device driving means (for example, an extending and retracting driving part 615A, a turning driving part 616A, and a rotation driving part 617A, described hereafter) and stores the display means (for example, a sub-monitor 613, described hereafter) to the storage part (for example, a sub-monitor storage part 62), if an input instructing game termination is received by the input reception means.

According to the twelfth aspect of the present invention, the control means is configured to control the connection device driving means such as to store the display means which is in a state enabling play when an input instructing game termination is received by the input reception means. Through this, for example, the game machine can be configured such that the display means which is placed in front of the player is cleared from the front of the player and stored within the storage part by pressing the game termination switch. Through this, the player can leave the seat smoothly after game termination and the issue of forgetting to store the display means can be prevented.

In a thirteenth aspect of the present invention, a game machine according to any of the eighth to eleventh aspect of the present invention has a terminal device (for example, a terminal device 30, described hereafter) includes a game medium insertion part (for example, a medal insertion part 734, described hereafter) for inserting a predetermined game medium and a insertion detection part (for example a medal insertion detector 735, described hereafter) for detecting that the game medium has been inserted into the game medium insertion part; and the control means (for example, a CPU 91, described hereafter) cannot control the connection device driving means (for example, an extending and retracting driving part 615A, a turning driving part 616A, and a rotation driving part 617A, described hereafter) during a normal state and becomes capable of controlling the connection device driving means when the insertion detection part detects the insertion of the game medium.

According to the thirteenth aspect of the present invention, the control means is configured to be capable of controlling the connection device driving means when the insertion of a game medium, such as a medal, to the game medium insertion part is detected. Through this, for example, the game machine can be configured such that insertion of a game medium, such as a medal, is in a condition for enabling the display means to be moved.

In a fourteenth aspect of the present invention, a game machine according to any of the eighth to eleventh aspect of the present invention has a display means (for example, a sub-monitor 613, described hereafter) includes an image display part (for example, an image display part 613A, described hereafter) for showing the game images; the connection rod (for example, a first support arm 612 and a second support arm 611, described hereafter) includes a first axis part (for example, a first axis part 617, described hereafter) for supporting the display means to enable turning, a first arm part (for example a first support arm 612, described hereafter), of which one end is connected to the first axis, a second axis part (for example, a second axis part 616, described hereafter), which is connected to the other end of the first arm part, for supporting the first arm part to enable turning, and a second arm part (for example, a second support arm 611), of which one end is connected to the second axis part and the other end is fixed to the main body part; and the connection device driving means (for example, an extending and retracting driving part 615A, a turning driving part 616A, and a rotation driving part 617A, described hereafter) includes an extending and retracting driving part (for example, an extending and retracting driving part 615A, described hereafter) for extending and retracting the second arm, a turning driving part (for example, a turning driving part 616A, described hereafter) for turning the first arm part to become a predetermined angle to the second arm part, and a rotation driving part (for example, a rotation driving part 617A, described hereafter) for rotating the display means such that the image display part faces the player-side.

According to the fourteenth aspect of the present invention, for example, by moving the display means outside of the storage part by expanding the extending and retracting driving part, moving the display means to the player-side by the turning driving part, and rotating the display means such that the image display part faces the player-side by the rotation driving part, the display means can be moved automatically from a state of being stored within the storage part to a state enabling viewing by the player. In this way, the display means can be moved to smoothly to a state enabling play and also moved such that it is not in the way of the player.

In a fifteenth aspect of the present invention, a game machine according to any of the eighth to eleventh aspect of the present invention has a connection device driving means includes an operation part (for example a first operation part 617d, a second operation part 616d, and a third operation part 615d, described hereafter) for converting air-pressure to mechanic motion and generating driving force, a ventilation pipe (for example a first ventilation pipe 617e, a second ventilation pipe 616e, and a third ventilation pipe 615e,described hereafter) for carrying air-pressure to the operation part, a safety valve (for example, a first safety valve 617c, a second safety valve 616c, and a third safety valve 615c, described hereafter) which is placed in the ventilation pipe, can be opened and closed, and enables reduction in air-pressure, and a load detection part (for example, a first load detection part 617B, a second load detection part 616B, and a third detection part 615B, described hereafter) for detecting the load applied to the connection device driving means; and the control means (for example, a CPU 91, described hereafter) reduces the air-pressure carried to the operation part by open-controlling the safety valve when the load detected by the load detection part is greater than the predetermined load.

According to the fifteenth aspect of the present invention, the game machine is configured such that the air-pressure carried to the operation part is reduced by opening the safety valve when the load detection part detects that a load greater than the predetermined load is applied to the connection device driving means. Through this, for example, when a part of the player's body is caught between a moving display means and the terminal device, the load detection part can detect the increase in load applied to the connection device driving means, and the movement of the display means can be terminated. Through this, injuries to the player can be prevented. In addition, damage due to mischief, such as holding back a moving display, can be prevented.

In a sixteenth aspect of the present invention, a game machine according to any of the eighth to eleventh aspect of the present invention has a position detection part (for example, a position sensor 614, described hereafter) for detecting the position of the display means (for example, a sub-monitor 613) to the player, is provided in the display means; in which the control means (for example, a CPU 91, described hereafter) controls the driving mechanism (for example, an extending and retracting driving part 615A, a turning driving part 616A, and a rotation driving part 617A, described hereafter) when the position detection part detects that the display means is not in a state enabling play and movement-controls the display means to a state enabling play.

According to the sixteenth aspect of the present invention, the control means is configured to movement-control the display means into a state enabling play when the position detection part is placed n the display means, detects the position of the display means to the player, and the display means is not in a state enabling play. In this way, the display means can be moved into a state enabling play and viewing by the player, without fail. Even if the player moves his sitting position, this can be detected and the display means can be moved to a state enabling play.

In a seventeenth aspect of the present invention, a game machine includes: a display means (for example, a sub-monitor 613, described hereafter) for showing game images generated according to a game program and player input; a seat part (for example, a terminal device 30, described hereafter) for enabling the player to sit, a storage part (for example, a sub-monitor storage part 62) which is formed in the seat part, for storing said display means; a connection rod (for example, a first support arm 612 and a second support arm 611, described hereafter) for connecting the display means to the storage part so as to freely enable storage thereof; and a holding rod (for example, holding rod 411) for holding the display means; in which the connection rod connects in cantilevered-state to one side part of the display part and places the display means in a state enable viewing by the player; and the holding rod engages with the other side part opposite of foregoing side part and holds the display means in the state enable viewing.

According to the seventeenth aspect of the present invention, the display means, which is held in a cantilevered-state by the connection rod in a position enabling viewing, is configured to engage with and be held by a holding rod on the side surface opposite of the side surface to which the connection rod is connected. Here, for example, if a mechanism for driving the holding rod is provided, the display means is configured to automatically engage with the display means when the display means is moved to a state enabling viewing by the player. Through this, swaying of the display means due to the player pressing the display means or movement of the seat can be suppressed.

In a eighteenth aspect of the present invention, a game machine includes a display means (for example, a sub-monitor 613, described hereafter) for showing game images generated according to a game program and player input, and a main body part in which a seat (for example, a seating part 52, described hereafter) for enabling the player to seat is provided, in which: a storage part (for example, a sub-monitor storage part 61, described hereafter) for storing the display means is formed in the main body part; the display means is provided to freely enable storage within the storage part via a connection device (for example, a connection device 600, described); the connection device comprises a connection rod (for example, a first support arm 612 and a second support arm 611, described hereafter), of which one end is fixed to the main body part and the other end is connected in cantilevered-state to the display means; an engaged part (for example, an engaged part 414, described hereafter) is provided in the display means, at a predetermined distance from the connection section of the connection rod; a holding device (for example, a holding device 400, described hereafter) comprising a holding rod (for example, a holding rod 411, described hereafter), of which one end id fixed to the main body part and the other end is engaged with the engaged part, is provided in the display means; a connection device driving means (for example, an extending and retracting driving part 615A, a turning driving part 616A, and a rotation driving part 617A, described hereafter) for storing the display means into the storage part, when a game is not being played and moving the display means to a predetermined position, into a state enabling play when playing, is connected to the connection device; a holding device driving means (for example, an extending and retracting device 415 and a turning device 416, described hereafter) for separating the holding rod from the engaged part, when a game is not being played and engaging the holding rod with the engaged part, into a state enabling play when playing, is connected to the connection device.

According to the eighteenth aspect of the present invention, the game machine is configured such that the display means which is held in a cantilevered-state by the connection device is automatically held by the holding device. Through this, for example, the holding rod can be configured to engage automatically with the display means when the display means is moved to a state enabling viewing by the player. Through this, swaying of the display means, which is generated by the player's body coming into contact with the display means, can be suppressed when playing, and an issue wherein the images become difficult to see due to the swaying of the display means can be alleviated.

Furthermore, the holding device can be configured to engage with the display means in a state enabling play and separate from the display means, in addition to the display means automatically being stored within the storage part, when in a non-playing state. Through this the display means can be moved and placed such as not to interfere with the player who is sitting down, and thus, the player can sit down smoothly.

In a nineteenth aspect of the present invention, a game machine according to the eighteenth aspect of the present invention has a touch-panel part (for example, a touch-panel part 613B, described hereafter) for receiving player input is provided on the front surface side of the display means (for example, a sub-monitor 613, described hereafter).

According to the nineteenth aspect of the present invention, a touch-panel part is provided on the front surface side of the display means. In this case, because the display is held by the holding device, vibration and swaying due to pressing by the player can be suppressed. Through this, the player can press the touch-panel firmly and perform input operation, and an issue wherein the images become difficult to see due to the swaying of the display means caused by input operations can be alleviated.

In a twentieth aspect of the present invention, a game machine includes a main game machine body (for example, a main game machine body 20, described hereafter), and a terminal device (for example, a terminal device 30, described hereafter), in which: the terminal device comprises a display means for showing game images generated according to a game program and player input, and a main body part in which a seat (for example, a seating part 52, described hereafter) for enabling the player to seat is provided; a storage part (for example, a sub-monitor storage part 61, described hereafter) for storing the display means is formed in the main body part; the display means is provided to freely enable storage within the storage part via a connection device (for example, a connection device 600, described hereafter); the connection device comprises a connection rod (for example, a first support arm 612 and a second support arm 611, described hereafter), of which one end is fixed to the main body part and the other end is connected to the display means; the connection device comprises a connection rod, of which one end is fixed to the main body part and the other end is connected in a cantilevered-state to the display means; an engaged part (for example, an engaged part 414, described hereafter) is provided in the display means, at a predetermined distance from the connection section of the connection rod; a holding device (for example, a holding device 400, described hereafter) comprising a holding rod (for example, a holding rod 411, described hereafter), of which one end id fixed to the main body part and the other end is engaged with the engaged part, is provided in the display means; a connection device driving means (for example, an extending and retracting driving part 615A, a turning driving part 616A, and a rotation driving part 617A, described hereafter) for storing the display means into the storage part, when a game is not being played and moving the display means to a predetermined position, into a state enabling play when playing, is connected to the connection device; a holding device driving means (for example, an extending and retracting device 415 and a turning device 416, described hereafter) for separating the holding rod from the engaged part, when a game is not being played and engaging the holding rod with the engaged part, into a state enabling play when playing, is connected to the connection device.

According to the twentieth aspect of the present invention, in a multi-player-type game machine wherein numerous players participate, such as a multiplayer game, the terminal device is configured such that the display means which is held in a cantilevered-state by the connection device is automatically held by the holding device. Through this, for example, the terminal device can be configured so that the holding rod automatically engage with the display means, when the display means is moved to a state enabling viewing by the player. Through this, swaying of the display means generated when the player's body comes into contact with the display means is suppressed when playing, and an issue wherein the images become difficult to see due to the swaying of the display means can be alleviated.

Furthermore, for example, the holding device can be configured to engage with the display means when in a state enabling play, and separate from the display means and also the display means automatically being stored within the storage part when in a non-playing state. In this way, the display means can be moved and placed such as not to interfere with the player who is sitting down, and thus, the player can sit down smoothly.

In a twenty-first aspect of the present invention, a game machine according to the twentieth aspect of the present invention has a touch-panel part (for example, a touch-panel part 613B, described hereafter) for receiving player input is provided on the front surface side of the display means (for example, a sub-monitor 613, described hereafter).

According to the twenty-first aspect of the present invention, a touch-panel part is provided on the front surface side of the display means. In this case, because the display is held by the holding device, vibrations and swaying due to pressing by the player can be suppressed. In this way, the player can press the touch-panel firmly and perform input operation, and an issue wherein the images become difficult to see due to the swaying of the display means caused by input operations can be alleviated.

In a twenty-second aspect of the present invention, a game machine according to any of the eighteenth to twenty-first aspect of the present invention has a position detection part (for example, a position sensor 604, described hereafter) for detecting the position of the display means (for example, a sub-monitor 613) to the player, is provided on the display means; the engaged part (for example, an engaged part 414, described hereafter) is provided in the display means, on the part opposite of the connection section of the connection rod (for example, a first support arm 612 and a second support arm 611, described hereafter); the holding rod (for example, a holding rod 411, described hereafter) is fixed to the side of the main body part which is opposite of the side to which the connection rod is fixed with the seated player therebetween; and the control means (for example, a CPU 91, described hereafter) controls the holding device driving means (for example, an extending and retracting device 415 and a turning device 416, described hereafter) so as to engage the holding rod with the engage part, when the position detection part detects that the display means is in the state enabling play.

According to the twenty-second aspect of the present invention, the holding device is configured to hold the display means if the position detection part placed in the display means detects that the display means is in a state enabling play. In this way, the holding device can appropriately hold the display means which is held in a cantilevered-state by the connection device in front of the player and is particularly wobbly and unstable. In this way, the display means which is held in a cantilevered-state by the connection device in front of the player and is particularly wobbly and unstable, is appropriately held by the holding device.

In addition, by providing the engaged part on the surface of the display means which is opposite of the connection position of the connection rod, the display means is held such as to be sandwiched from both side surfaces, in which one side surface of this display means is supported by the connection rod and the opposing side surface is held by the holding rod. In other words, the display means is held in a center-impeller state by the connection rod and the holding rod. In this way, vibrations of the display means due to the player's body coming into contact with the display means or the movement of the terminal device can be suppressed appropriately and an issue wherein the images become difficult to see due to the swaying of the display means and an issue wherein the pressing operation of the touch-panel is difficult can be alleviated.

According to the present invention, a new game machine with a display means connected to the seat on which the player is seated freely enables storage.

Further features of the invention, its nature, and various advantages will be more apparent from the accompanying drawings and the following detailed description of the invention.

### BRIEF DESCRIPTION OF THE DRAWINGS

Fig. 1 is a perspective view showing an outward aspect of the game machine according to an embodiment of the present invention;
Fig. 2 is a perspective view showing an outward aspect of a terminal device of the game machine;
Fig. 3 is a perspective view showing an outward aspect of the terminal device of the game machine;
Fig. 4 is a perspective view showing an outward aspect of the terminal device of the game machine;
Fig. 5 is a perspective view showing an outward aspect of the terminal device of the game machine;
Fig. 6 is an enlarged perspective view of a part of the traveling part of the terminal device;
Fig. 7 is a perspective view of the seat of the terminal device in seat mode;
Fig. 8 is a perspective view of the seat of the terminal device in bed mode;
Fig. 9 is a perspective view showing a state wherein a sub-monitor of the terminal device is stored within a sub-monitor storage part;
Fig. 10 is a perspective view showing a state wherein a sub-monitor of the terminal device is pulled out from within the sub-monitor storage part;
Fig. 11 is a perspective view showing a state wherein a sub-monitor of the terminal device is turned toward the player-side;
Fig. 12 is a perspective view showing a state wherein a sub-monitor of the terminal device is turned such that the image display part thereof faces the player-side;
Fig. 13 is a perspective view of a sub-display part when the sub-monitor is pulled out;
Fig. 14 is a perspective view showing a state wherein a sub-monitor is connected to the connection rod to enable turning via a turn biasing part;
Fig. 15 is a perspective view showing a state wherein a connection rod is connected to the terminal device to enable sliding;
Fig. 16 is a perspective view showing a state wherein a sub-monitor which is placed in a position enabling viewing is held by a holding device;
Fig. 17 is a perspective view showing a state wherein a sub-monitor which is placed in a position enabling viewing is held by a holding device;
Fig. 18 is a block diagram showing a configuration of the driving part which drives the supporting components;
Fig. 19 is a block diagram showing the entire configuration of the game machine;
Fig. 20 is a block diagram showing a configuration of the main control device of the main game machine body;
Fig. 21 is a block diagram showing a configuration of the sub-control device of the terminal device;
Fig. 22 is a main flow chart of a game executed in the game machine;
Fig. 23 is an operation flow chart of a sub-monitor in the terminal device;
Fig. 24 is a flowchart of a game processing of the game program executed in the game machine;
Fig. 25 is a flowchart of each player in a game program executed in the game machine;
Fig. 26 is a flow chart of when a player encounters another player in a game field in the game program;
Fig. 27 is a flowchart of when a macroquest is generated in the game field in the game program;
Fig. 28 is a perspective view showing a state wherein a macroquest is generated in the game field in the game program of the game machine; and
Fig. 29 is a perspective view showing a state wherein fellow players participate in a macroquest generated in the game field in the game program of the game machine.

### BEST MODE FOR CARRYING OUT THE INVENTION

A game machine in a preferred embodiment is described below.

### Over All Configuration of the Game Machine

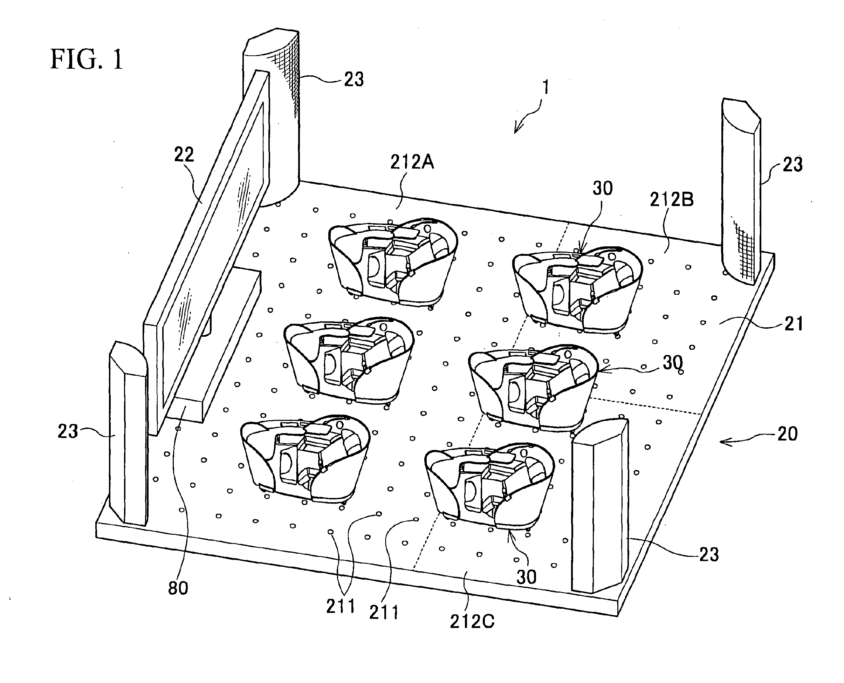

Fig. 1 is a perspective view showing an outward aspect of the game machine according to an embodiment of the present invention.

The game machine 1 is a multi-player game machine, including a main game machine body 20 which includes a flat, rectangular play area 21 and a plurality of terminal devices 30 which are placed on this play area 21.

Aside form the play area 21, the main game machine body 20 includes a main display device 22 which is placed along one side of the play area 21, a speaker device 23 which is placed in the four corners of the play area 21, and a main control device 80 for controlling these main display device 22 and speaker device 23.

The play area 21 is divided into a plurality of sub-areas 212. As these sub-areas 212, there are city areas 212A, ocean areas 212B, and forest areas 212C. In addition, IC tags 211 are buried in grid-form in the play area 21. Positional information of the inside of the play area 21 is stored to this IC tag 211.

The main display device 22 is a large projector display device showing images based on image data output from the main control device 80. The main display device 22 is not limited thereto and can also be a large monitor.

The main control device 80 can communicate with each terminal device 30 bi-directionally through wireless LAN and can provide each player with a common virtual space by executing the predetermined game program and bi-directionally communicating with each terminal device 30.

Each terminal device 30 is placed facing towards the main display device 22. This terminal device 30 is connected to the main control device 80 through wireless LAN and can be moved over the play area 21 according to the instructions from the main control device 80 or by player operation.

### Configuration of the Terminal Device

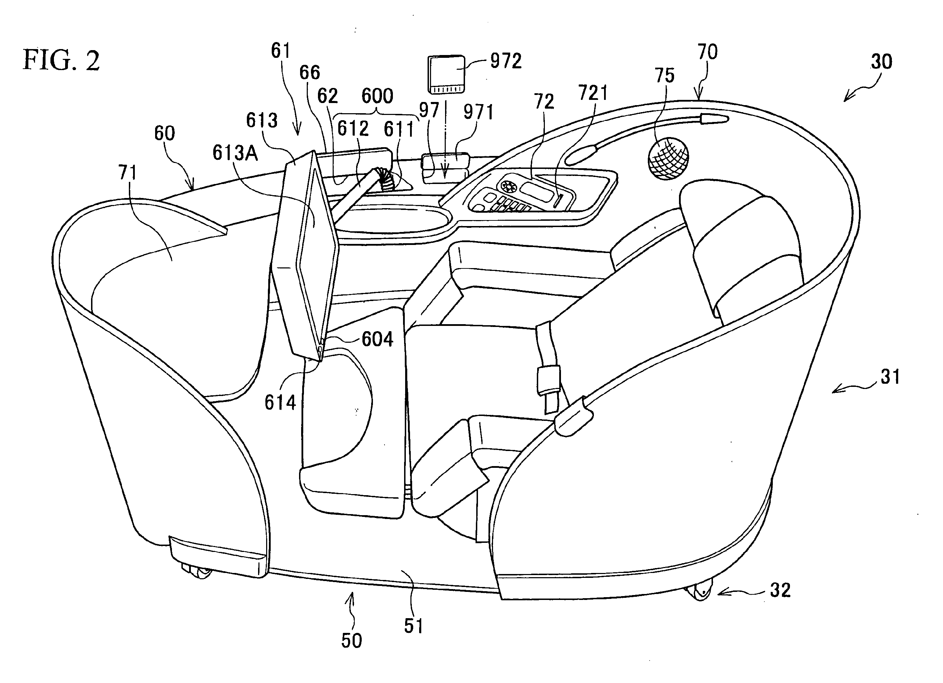

Fig. 2 to Fig. 5 are perspective views showing an outward aspect of each terminal device.

The terminal device 30 according to Fig. 2 includes a seat 31 for enabling the player to sit, a traveling part 32, which is provided on the lower part of the seat 31, for moving the seat 31 over the play area 21, and a sub-monitor 613 which is provided separately from the seat 31. The sub-monitor 613 is supported by a connection device 600 having a connection rod, the constituent components of which are a first support arm 612 and a second support arm 611, in a state enabling viewing when the player is seated. A turning driving part 616A for turning the first support arm 612 and an extending and retracting driving part 615A for extending and retracting the second support arm 611 are connected to this connection device 600. These parts are controlled by the main control device 80 and the sub-control device 90, which move the sub-monitor 613 to a predetermined position and hold this sub-monitor 613.

In addition, the sub-monitor 613 is stored within a sub-monitor storage part 62 when a game is not played. Through this, damage to the sub-monitor 613 and the like can be prevented. Furthermore, because the sub-monitor 613 is configured separately from the seat 31, game media, such as medals and coins, cannot be stolen even by breaking the sub-monitor, and thus, damage to the sub-monitor and the like can be prevented.

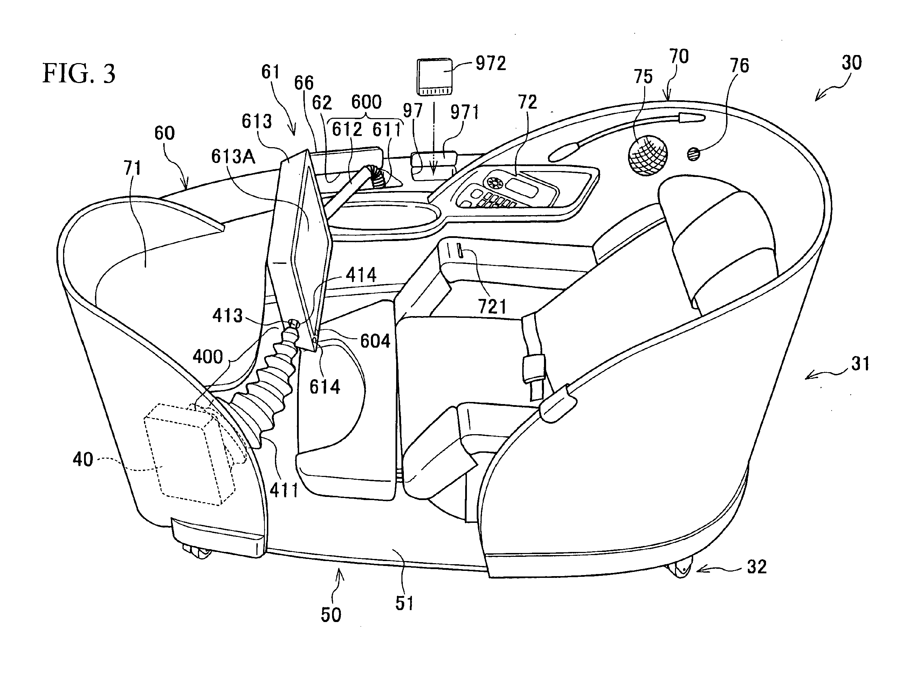

The terminal device 30 according to Fig. 3 includes a holding device 400 for engaging with and holding the side surface of the sub-monitor 613. Specifically, the holding device 400 engages with and holds the surface of the sub-monitor 613, supported by the connection device 600 in a cantilevered-state to enabling viewing by the player in a seated state, which is opposite of the surface to which the connection device 600 is connected in this sub-monitor 613. This holding device 400 includes a holding device storage part 40, a holding rod 411 which is placed to enable appearance from the holding device storage part 40, and an engaging part 413 which is provided on one end of the holding rod 411. This holding rod 411 is an accordion-shaped component which can be retracted and bent. In addition, this holding rod 411 is extending and retracting driven such that the engaging part 413 is engaged with the engaged part 414, formed on the side surface of the sub-monitor 613.

In this way, the sub-monitor 613 is held by the holding device 400, and the holding device 400 can suppress the vibrations of the sub-monitor 613 which is generated by the player bumping into the sub-monitor 613, the terminal device 30 moving, and the like.

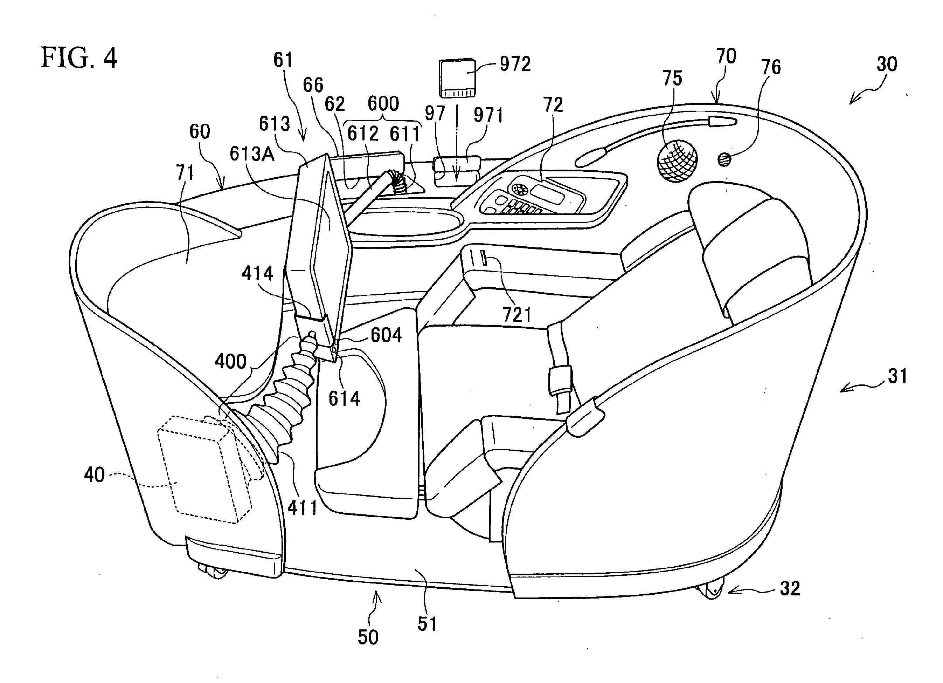

The terminal device according to Fig. 4 includes a holding device 400 for engaging with and holding the side surface of the sub-monitor 613, as does the terminal device 30 according to Fig. 3. Specifically, the holding device 400 engages with and holds the surface of the sub-monitor 613, supported by the connection device 600 in a cantilevered-state to enabling viewing by the player in a seated state, which is opposite of the surface to which the connection device 600 is connected in this sub-monitor 613.

This holding device 400 includes a holding device storage part 40, a holding rod 411 which is placed to enable appearance from the holding device storage part 40, and a roughly U-shaped engaging part 413 which is provided on one end of the holding rod 411.
The holding rod 411 is an accordion-shaped component which can be retracted and bent. In addition, this holding rod 411 is extending and retracting driven such that the engaging part 413 is engaged with the engaged part 414, formed on the side surface of the sub-monitor 613.

In this way, the sub-monitor 613 is held by the holding device 400, and the holding device 400 can suppress the vibrations of the sub-monitor 613 which is generated by the player bumping into the sub-monitor 613, the terminal device 30 moving, and the like.

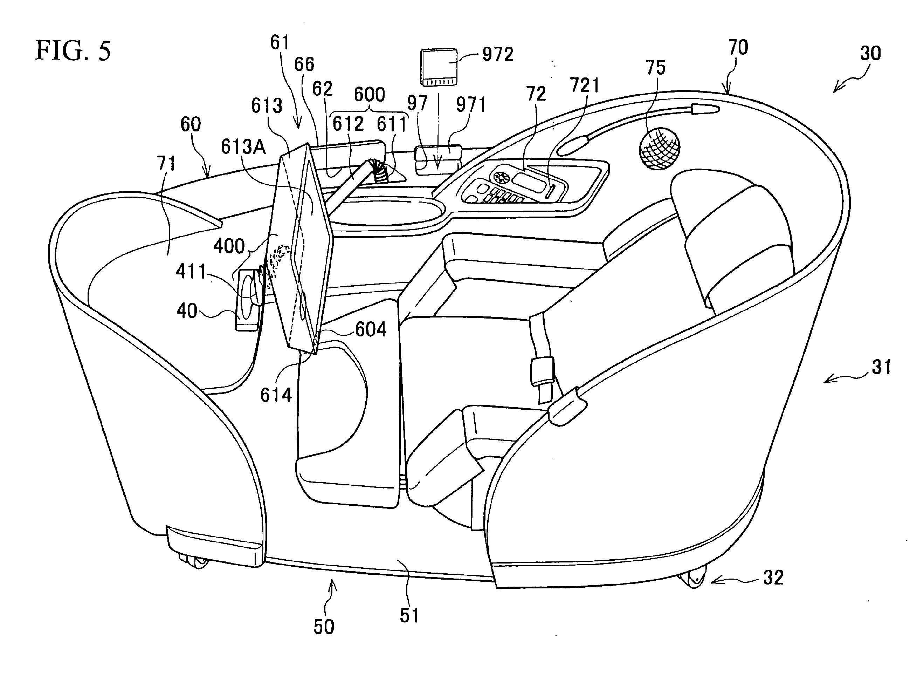

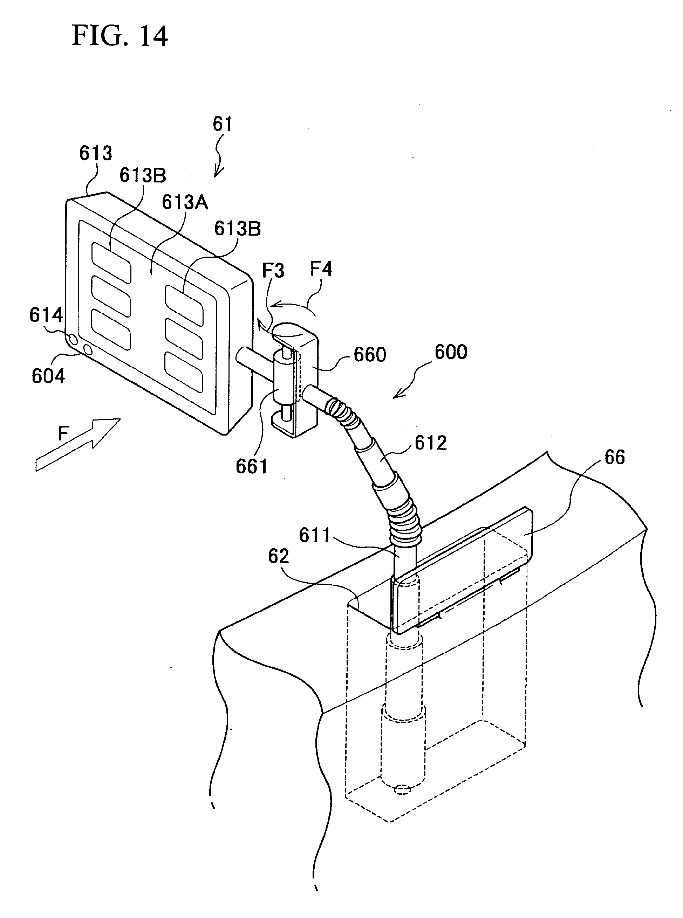

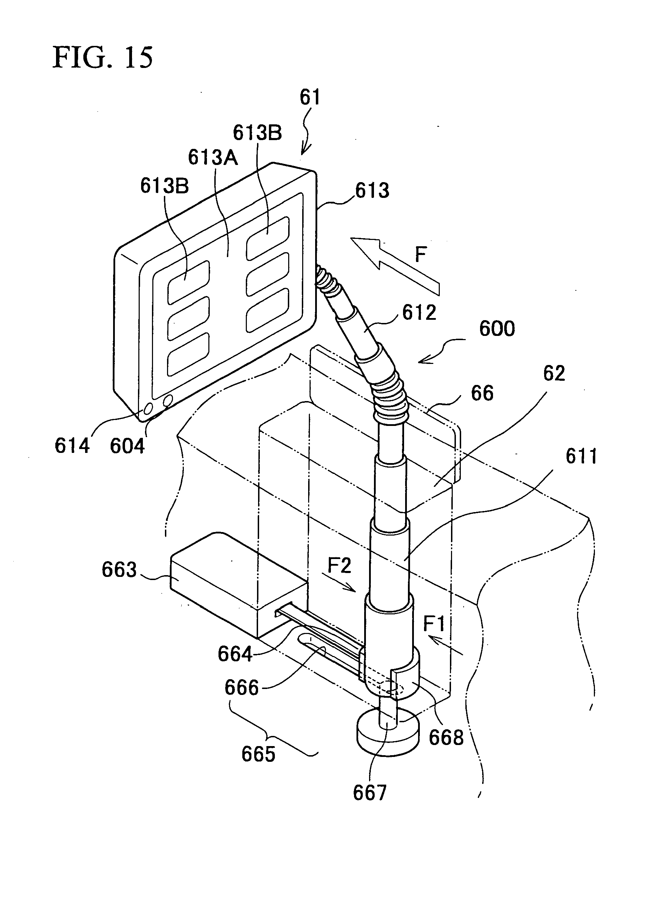

The terminal device 30 according to Fig. 5 includes a holding device 400 for engaging with and holding the back surface of the sub-monitor 613. Specifically, the holding device 400 engages with the surface of the sub-monitor 613, supported by the connection device 600 in a cantilevered-state to enable viewing by the player in a seated state, which is opposite of the surface onto which an image display part 613A is provided in this sub-monitor 613, and holding the sub-monitor 613. This holding device 400 includes a holding device storage part 40, a holding rod 411 which is placed to enable appearance from the holding device storage part 40, and an engaging part 413 which is provided on one end of the holding rod 411. The holding rod 411 is an accordion-shaped component which can be retracted and bent. In addition, this holding rod 411 is engaged with an engaged part 414 (refer to Fig. 14 and Fig. 15), formed on the back surface of the sub-monitor 613 which faces the image display part 613A.

In this way, the sub-monitor 613 is held by the holding device 400, and the holding device 400 can suppress the swaying of the sub-monitor 613 which is generated by press-operating a touch-panel 613B in the image display part 613A.

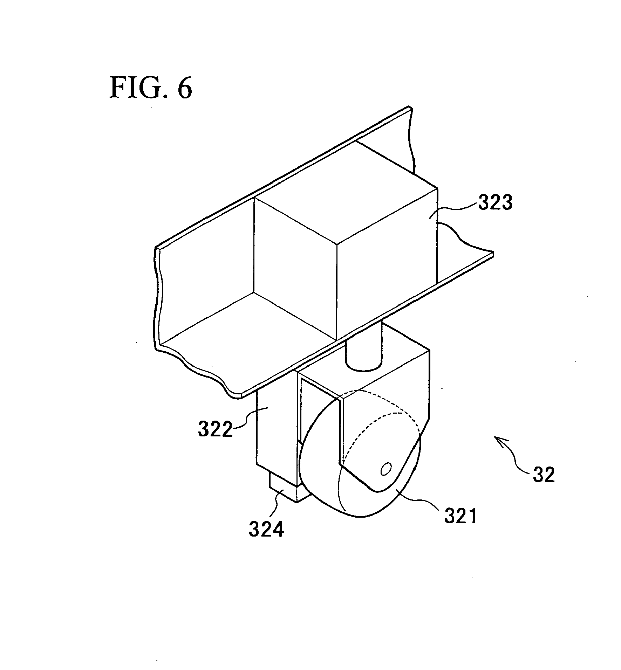

Fig. 6 is an enlarged perspective view of a section of a traveling part 32.

The traveling part 32 includes four traveling tires 321, a tire driving control device 322 for rotation-driving these traveling tires 321, a tire direction control device 323 for controlling the direction of the traveling tires 321, and a rechargeable battery, not illustrated, for supplying the tire driving control device 322 and tire direction control device 323 with power.

The traveling part 32 can move a seat 32 to an arbitrary position on the play area 21 by the tire driving control device 322 and the tire direction control device 323.

The foregoing rechargeable battery can be recharged through connection to an external power source, but is not limited thereto, and can be recharged by self-induced electromotive force due to a magnetic field, by embedding a magnetic field generating device in the play area 21 and generating a magnetic field by this magnetic field generating device.

In addition, an IC tag detection part 324 for detecting IC tags 211, which are buried in the play area 21, is provided below the tire driving control device 322 of the traveling part 32.

### Configuration of the Seat

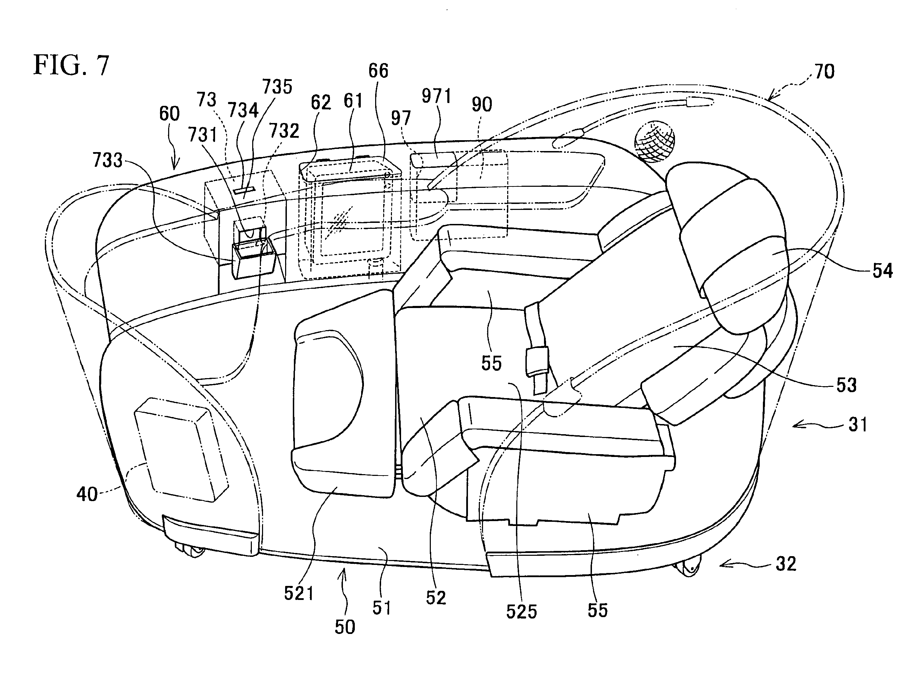

Fig. 7 is a perspective view of the seat 31 in seat mode.

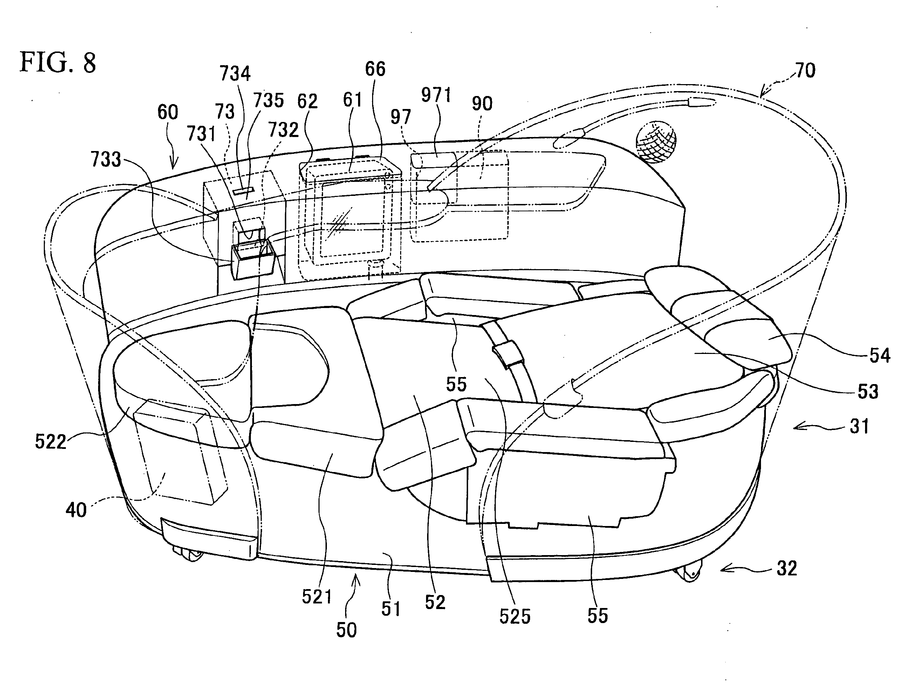

Fig. 8 is a perspective view of the seat 31 in bed mode.

The seat 31 includes a main seat body 50, a side unit 60 which is provided along one side surface of the main seat body 50, and a seat shell 70 which surrounds the main seat body 50 on three sides, excluding the other side surface side.

The mode of this seat 31 can be adjusted in multiple steps, between the seat mode shown in Fig. 7 and the bed mode shown in Fig. 8.

The main seat body 50 includes a flat base part 51, a seating part 52 which is provided on this base part 51, a back rest 53 which is attached to enable changing of its angle to the seating part 52, a head rest 54 which is provided on the top part of the back rest 53, a pair of side arms 55 which are provided in positions on the seat surface of the seating part 52 and both sides of the back rest, and a seating detector 525 for detecting that the player is seated, which is provided under the seat surface of the seating part 52.

The seating part 52 moves back and forth on the base part 51 when the player operates the input operation part 72. The main seat body 50 changes from the seat mode shown in Fig. 7 to the bed mode shown in Fig. 8, when this seating part 52 is slid forward, and forms a bed.

The seating part 52 includes a leg rest 521 which is provided on the front surface side and a foot rest 522 which is stored in the tip of this leg rest 521. The leg rest 521 turns upward according to the sliding motion, when the seating part 52 is slid forward, and becomes a seat surface which continues from the seat surface of the seating part 52. At the same time, the foot rest 522 projects from the leg rest 521 and becomes a seat surface which continues from the leg rest 521.

The back rest 53 falls backward, according to the back and forth movement of the seat part 52 on the base part 51.

The front surface side of the side arm 55 turns slightly upward, when the main seat body 51 is placed in bed mode.

A bag component, into which air can be injected, is embedded respectively within the seat surface of the seating part 52, the lower part of the back rest 53 (which comes into contact with the lower back of the player) and the head rest 54. When air is injected into these bag components by an air pump, the surface swells and can support the user while accommodating the contours of the body surface of the user.

The seating detector 525 is placed under the seat surface of the seating part 52 and detects that the player is seated. Then, if the seating detector 525 detects that the player is seated, a predetermined control signal is transmitted from the main control device 80 to the sub-control device 90, and the sub-control device 90 controls the driving mechanisms which drive the connection device and the holding device.

A sub-monitor storage part 62 is formed in the side unit 60 and a sub-display part 61 is stored within this sub-monitor storage part 62. In addition, a storage part cover 66 is provided in the upper part of the sub-monitor storage part 62 so as to enable opening and closing. Through this, for example, the sub-monitor storage part 62 is configured such that the storage part cover 66 can be opened when the medal insertion detector 735 detects the insertion of a medal, which is a game medium. In other words, the sub-monitor 613 is released from a state prohibiting outward movement from the sub-monitor storage part 62, by meeting predetermined conditions.

Here, other than placing the sub-monitor 613 in a movement prohibited state by the storage part cover 66, as such, for example, the sub-monitor 613 can be placed in a movement prohibited state by locking the connection device 600. These movement prohibition means are controlled based on the status of the game run by the game program, as described hereafter. For example, the movement prohibition means are controlled to release the movement prohibition state when the game status is a state enabling play.

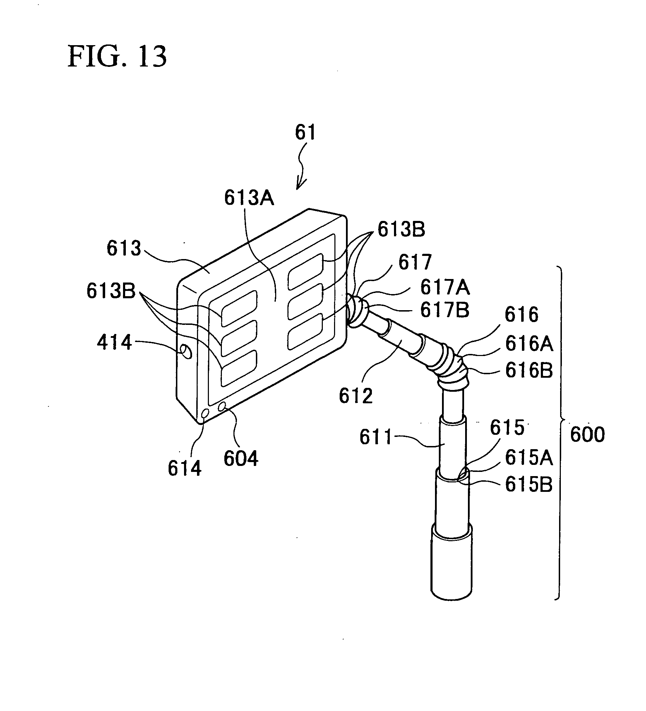

Fig. 13 is a perspective view of a sub-display part 61 when the sub-monitor 613 is pulled out.

As shown in Fig. 13, the sub-display part 61 includes a flat, rectangular sub-monitor 614, and a connection device 600 for connecting the sub-monitor 614 with the seat 31.

This connection device 600 includes a second support arm 611 which is supported by the side unit 60, a first support arm 612 which is attached to the tip of the second support arm 611. The sub-monitor 613 is attached to the tip of the first support arm 612.

The second support arm 611 can be expanded and contracted freely in the direction vertical to the side unit 60. The first support arm can extend and retract freely and can be fixed to an arbitrary angle to the axis direction of the second support arm 611. The sub-monitor 613 can be fixed to an arbitrary angle to the axis direction of the first support arm 612.

Specifically, the connection device 600 includes a first axis part 617 for supporting the sub-monitor 613 to enable rotation, a first support arm 612, of which one end is connected to the first axis part 617, a second axis part 616 which is placed on the other end of the first support arm 612 and supports the first support arm 612 to enable turning, and a second support arm of which one end is connected to the second axis part 616 and the other end is connected to the side unit 60 of the terminal device 30.

Furthermore, the connection device 600 includes a rotation driving part 617A which is connected to the sub-monitor 613 and rotates this sub-monitor 613 such that the image display part 613A faces the player-side, a turning driving part 616A which is connected to the first support arm 612 and turns the first support arm 612, and an extending and retracting driving part 615A which is placed in the second support arm 612 and extends and retracts the second support arm 611.

In addition, the sub-display part 61 includes a first load detection part 617B placed in the vicinity of the rotation driving part 617A, for detecting the load applied to the rotation driving part 617A, a second load detection part 616B placed in the vicinity of the turning driving part 616A, for detecting the load applied on the turning driving part 616A, and a third load detection part 615B placed in the vicinity of the extending and retracting driving part 615A, for detecting the load applied to the extending and retracting driving part 615A.

If a load which is greater than the predetermined load is applied to each driving part, each detector transmits a signal notifying the sub-control device 90 not shown that a load greater than the predetermined load has been applied. The sub-control part which received this signal controls respective constituent parts according to the size of the load and the circumstances wherein the load is applied.

The sub-monitor 613 includes an image display part 613A, which is placed in one wide surface thereof, a small CCD camera 614, and a position sensor 604. This image display part 613A is composed of a liquid crystal display, a plasma display, an organic EL (ElectroLuminescent) display or the like.

In addition, the image display part 613A includes a touch-panel part 613B. By directly touching the tough-panel part 613B, the player can operate the terminal device or give predetermined instructions during a game. This touch-panel part 613B is formed by placing a transparent touch-panel sheet on the front surface of the image display part 613A. Then, if the touch-panel 613B is formed as such, the game images and the like which are shown in the image display part 613A on the back surface side can be viewed through the touch-panel part 613B. In other words, the player can perform predetermined input operations with the touch-panel part 613b while viewing the game images shown in the image display part 613A.

For example, if the pressing force to the touch-panel part 613B placed in the sub-monitor 613, is large and a load which is greater than the predetermined load (for example, a first load) is detected by the first load detection part 617B or the second detection part 616B, a predetermined sound, such as the sound of air being released, is generated and the player is warned that they are pressing the sub-monitor 613 too hard. This is so as not to encourage excessive pressing of the sub-monitor 613 by the player. This predetermined sound, such as the sound of air being released, can be a sound which is physically generated when opening the first safety valve 617c or the second safety valve 616c, described hereafter, or can be a simulated pseudo-sound. Furthermore, a so-called warning sound can be released from the speaker 75. This warning regarding excessive pressing of the sub-monitor 613 by the generation of this predetermined sound is performed in the stage before the sub-monitor 613 is cleared when excessive pressing force is applied to the touch-panel part 613B, described hereafter. In order that a situation interfering with the progress of the game, meaning the movement to safety of the sub-monitor 613, does not occur, this warning is effective in notifying the player that it is a stage prior thereto. In addition, if the sub-monitor 613 continues to be pressed hard, even after warning by the generation of this predetermined sound is released, the sub-monitor 613 and the connection device 600 are moved to safety, described hereafter, in order to prevent damage thereto.

In addition, for example, if the pressing force applied to the touch-panel part 613B, placed in the sub-monitor 613, is large and the first lead detection part 617B or the second load detection part 616B detects a load which is greater than the predetermined load (for example, a second load), as above, the sub-monitor 613 and the like are controlled by a pressing force reduction means to be cleared in a direction heading away from the player. A detailed example is given hereafter.

In addition, for example, if the first load detection part 617B or the like detects a load which is greater than a predetermined load (for example, a third load) while the sub-monitor 613 is being moved by the connection device 600, the first safety valve 617c or the like are opened. In this way, damage to the sub-monitor 613 and the connection device 600 is prevented. In addition, if the player's hand is caught between the sub-monitor 613 and the sub-monitor storage part 62 or the like when the sub-monitor 613 is moved to be stored within the sub-monitor storage part 62, a damper, such as an air damper which is not shown which is placed in the connection device, cooperates to prevent injuries to the player. A detailed example is given hereafter.

Here, although the player performs input operations by pressing the touch-panel 613B, the sub-monitor 613 and the connection device 600 is damaged if the pressing force is too strong because the sub-monitor is held in a cantilevered-state by the connection device 600. In order to reduce the influence of such pressing force, a pressing force reduction means is provided, a detailed example thereof given hereafter.

Fig. 14 is a perspective view of a sub-display part 31.

The connection device 600 according to Fig. 14 further includes a sub-monitor turning axis 660 and a turn biasing part 661. Specifically, the sub-monitor 613 is supported to enable turning by the sub-monitor turning axis 660, provided in the end part of the first support arm 612, via the turn biasing part 661.

The turn biasing part 661 is rotation-energized by a predetermined biasing force F4, in the direction opposite of the direction in which the sub-monitor 613 turns, by the pressing operation by the player. During a normal state, the tuning of the sub-monitor 613 by the turn biasing part 661 to the player-side is regulated by an un-illustrated locking part. In addition, if load F3 in the turning direction, generated in the sub-monitor turning axis 660 by the pressing force F applied to the sub-monitor by the player, is greater than the biasing force F4 in the turning direction, provided by the turn biasing part 661, the sub-monitor 613 is turned and cleared to the direction heading away from the player (direction of F3), and damage to the sub-monitor 613 and the connection device 600 and the like due to the pressing force F is prevented.

Here, the turn biasing part 661 can be configured as a spring formed to be wound around the turning axis or a lock which is released when a load greater than a predetermined load is applied. In addition, the turning driving part 616A, the rotation driving part 617A, and the like, which are connection device driving devices, can be controlled and the sub-monitor can be turned and cleared, according to the load detected by the first load detection part 617B and the second load detection part 616B.

Fig. 15 is a perspective view of the sub-display part 31.

As shown in Fig. 15, the connection device connected to the sub-monitor 613 is connected to the bottom part of the sub-monitor storage part 62 to enable sliding by the connection rod sliding mechanism 665. A sliding part component 667 which is provided on one end of the connection rod in the connection device 600 is placed on a sliding groove 666, formed on the bottom surface of the sub-monitor storage part 62, so as to enable sliding. The biasing part 663 which is placed such as to expose one surface thereof from the side surface of the sub-monitor storage part 62 includes a contact part 664 which is in contact with the connection rod, and biases the connection rod via the contact part 664 with biasing force F2 on the player side 668.

The movement of the connection rod to the player-side due to the biasing part 663 is regulated by the locking part 668 which is provided in the player-side. In addition, if the load F1 which is generated in the connection rod by the pressing force F applied to the sub-monitor 613 by the player is greater than the biasing force F1 provided by the biasing part 663, the connection rod is slid and cleared in the direction away from the player (direction of load F1) and damage to the sub-monitor 613, the connection device 600 and the like due to the pressing force F can be prevented. Here, the biasing part can be configured as a spring with a predetermined shape or a lock which is released when a load greater than a predetermined load is applied.

Here, if the pressing force reduction means is configured such that the sub-monitor 613, which has been cleared to the pressing direction, is returned to its original position, for example, because it is not necessary to halt the game or the like due to moving the sub-monitor 613 to safety, when the pressing force reduction means is the biasing part 663 or the turn biasing part 661, the player can play the game continuously.

Through this, damage to the sub-monitor can be prevented and the player can attain a sense of satisfaction, as well.

A CCD camera 614 is placed on the same surface of the sub-monitor 613 as the surface to which the image display part 613A is placed. This CCD camera 614 is used mainly when creating an avatar in the game field. In addition, the image taken by the CCD camera 614 can be shown constantly in the image display part 613A of the sub-monitor 613. Through this, the player can see his own expression during the game, thus increasing enjoyment. In this case, the taken image can be shown in the entire image display part 613A of the sub-monitor 613 or can be shown in one part thereof. These image displays can be switched by operating the input operation part 72 (described hereafter). Furthermore, the sub-control device 90 analyzes the image taken by the CCD camera 614 and verifies whether the sub-monitor 613 is placed in a position enabling viewing by the player, accordingly.

A position sensor 604 is placed on the same surface in the sub-monitor 613 as the surface to which the image display part 613A is placed. The position sensor 604 detects the position of the player and detects whether the player is in an appropriate position. In other words, the position sensor 604 detects whether the sub-monitor 613 is placed in a position enabling viewing by the player.

In addition, if the sub-monitor 613 is in a position enabling viewing by the player, a viewing possible signal which notifies the sub-control device 90 which is not shown that the sub-monitor 613 is in a position enabling viewed by the player is output. The sub-control device 90, which received this viewing possible signal, transmits a signal notifying the main control device 80 that this viewing possible signal had been received. The main control device 80, which receives this signal, transmits an adjustment signal for instructing control that the sub-monitor 613 is placed in a position enabling viewing to the sub-control signal. Furthermore, the sub-control device 90 which receives this adjustment signal controls the connection device driving means for driving the connection device and moves the sub-monitor 613 to a position enabling viewing.

When the player is not seated, the sub-monitor 613 is stored to the sub-monitor storage part 62 which is formed in the side unit 60. When the sub-monitor 613 is in a state of being stored within the sub-monitor storage part 62, a storage part cover 66 covers the opening part in the upper part and the sub-monitor cannot be moved outward.

In addition, for example, if the predetermined conditions regarding when the medal insertion detector 735 detects the insertion of a predetermined number of medals, when a game start input is received from the input operation part 72, or when the seating detector 525 detects that the player is seated, are met, the storage part cover 66 can be opened manually or automatically by the CPU 91, described hereafter, and the sub-monitor 613 is moved outward.

Furthermore, the sub-monitor 613 is pulled out from the sub-monitor storage part 62, manually or automatically. If the sub-monitor 613 is automatically pulled out of the sub-monitor storage part 62, for example, it is movement-controlled to a position enabling viewing by the player, with the foregoing predetermined conditions and the like as a trigger. An example of this operation is described hereafter.

Reception of an input instructing the moving of the sub-monitor 613 by the input operation part 72 and detection of the player being seated by the seating detector 525, for example, can be given as triggers by which the sub-monitor 613 is automatically moved to a position enabling viewing, as is given as the triggers for releasing the movement prohibited state of the sub-monitor 613.

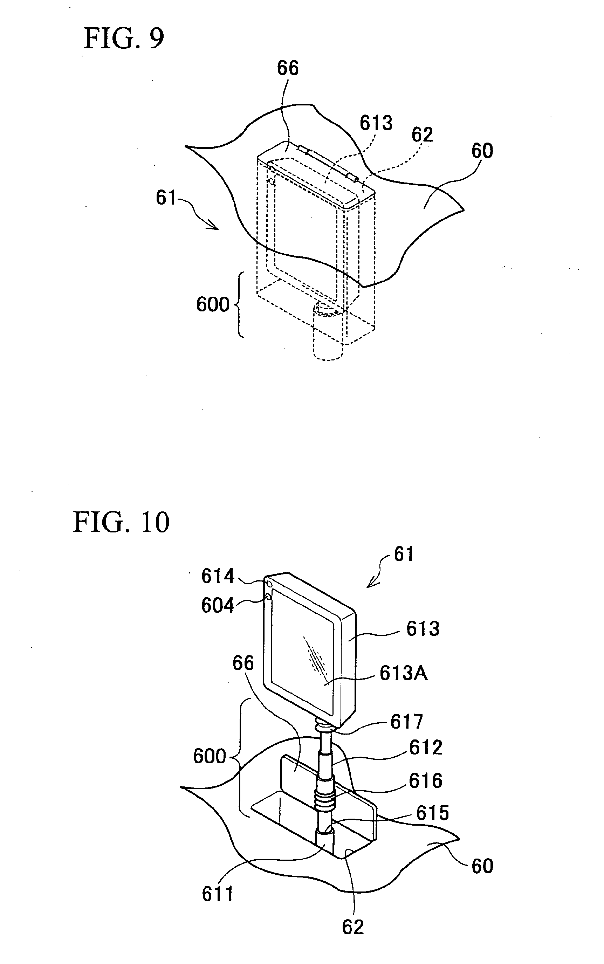

Specifically, after the sub-monitor 613 is released from the movement prohibited state and can be moved, the main control device 80 transmits a movement signal instructing for the sub-monitor 613 to be moved and controlled into a state enabling play to the sub-control device 90. The sub-control device 90 which receives this movement signal, controls the extending and retracting driving part 615A which is a connection device driving device, the turning driving part 616A and the rotation driving part 617A and places the sub-monitor 613 in a state enabling play by movement-controlling to a predetermined position from a state of being stored within the sub-monitor storage part 62. Detailed operations are described in Fig. 9 to Fig. 12.

Fig. 9 is a perspective view showing a state wherein the sub-monitor 613 is stored within the sub-monitor storage part 62.

Fig. 10 is a perspective view showing a state wherein the sub-monitor 613 is pulled out from within the sub-monitor storage part 62.

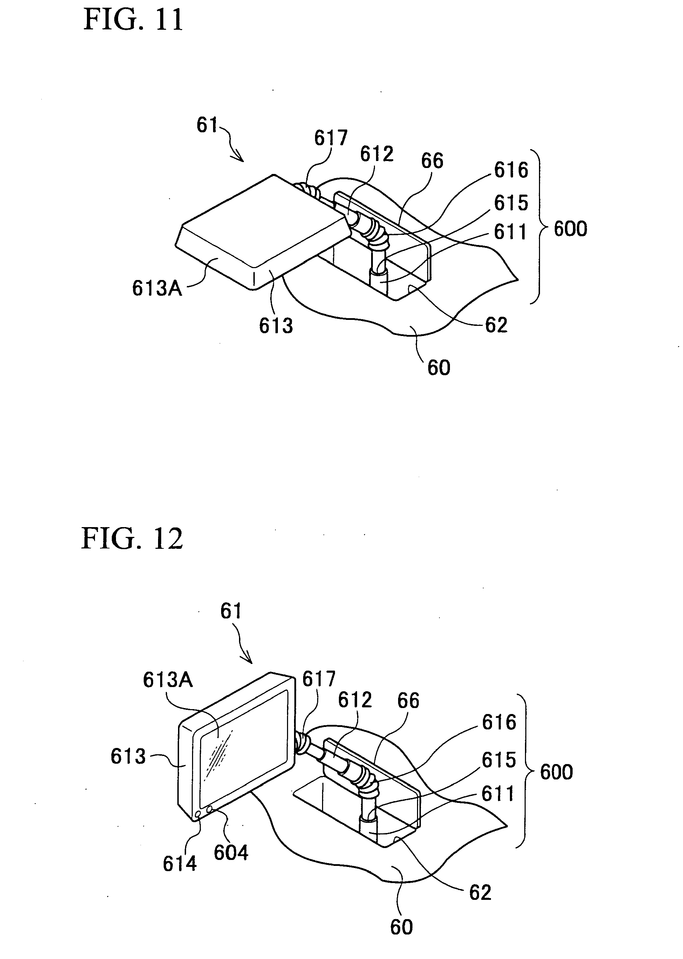

Fig. 11 is a perspective view showing a state wherein the sub-monitor 613 is turned toward the play-side.

Fig. 12 is a perspective view showing a state wherein the sub-monitor 613 is turned such that the image display part 613A thereof faces the player-side.

In the state shown in Fig. 9, the storage cover 66 is closed and the sub-monitor 613 cannot be moved outside. The connection device 600 which is connected to the sub-monitor 613 is contracted, and the sub-monitor is stored in a state wherein the surface to which the connection device 600 is connected is the bottom surface and the image display part 613A faces the side of the player not shown who is seated in the seat.

After the storage part cover 66 is opened by a predetermined trigger, the sub-display part 61 in a stored state in this Fig. 9 pulls the sub-monitor 613 outward from the sub-monitor storage part by expanding the second support arm 611 by the extending and retracting driving part 615A, as shown in Fig. 10.

Next, the sub-display part 61, of which the sub-monitor 613 is pulled outward from the sub-monitor storage part 62, is placed in a state shown in Fig. 11, wherein the first support arm 612 is turned by the turning driving part 616A, and the sub-monitor 613 is moved to the vicinity of the player not shown and is placed such that the image display part 613A is facing down.

Then, the sub-display part 61, which is moved to the vicinity of the player not shown and is placed such that the image display part 613A is facing down, is placed in a state shown in Fig. 12, wherein the sub-monitor 613 is rotated by the rotation driving part 617A and is placed such that the image display part 613A faces the player not shown.

The position sensor 604 in Fig. 12 detects the position of the player and detects whether the sub-monitor 613 is placed in a state enabling viewing by the player. Then, if the sub-monitor 613 is not placed in a state enabling viewing by the player, the main control device 80 transmits an adjustment signal instructing for the sub-monitor 613 to be movement-controlled into a state enabling viewing by the player to the sub-control device 90. Upon receiving this adjustment signal, the sub-control device 90 drive-controls the turning driving part 616A and the rotation driving part 617A, which are connection device driving means and places the sub-monitor 613 in a state enabling viewing by the player.

Here, as a prerequisite for the trigger which starts the driving of the sub-display part 61, detection of the insertion of a medal, which is a game medium, by the medal insertion detector 735 can be given. In other words, the sub-monitor 613 cannot be pulled out of the sub-monitor storage part 62 by merely entering an instruction for the movement of the sub-monitor 613 or by the player sitting down, but rather, the sub-control device is configured to enter a reception enabled state, in which a movement signal from the main control device 80 can be received, only when a medal, which is a game medium, is inserted into a medal insertion part 734, and this is detected by the medal insertion detector 735. In this case, for example, when the medal insertion detector 735 detects the insertion of a medal, which is a game medium, the storage part cover 66 can be opened and the sub-monitor enters a state enabling movement. Then, when the seating detector 525 detects that the player is seated, the sub-monitor 613 can be pulled out automatically into a position enabling viewing by the player.

Although, as stated above, the sub-monitor 613 is moved automatically from a state of being stored within the sub-monitor storage part 62 into a state enabling play which is a state enabling view by the player, configurations can further be made such that this sub-monitor 613, which is in a state enabling play, is stored automatically within the sub-monitor storage part 62. For example, when an input instructing game termination is received by the input operation part 72 or when the seating detector 52 detects that the player has left the seating part 52, the main control device 80 transmits a storage signal instructing for the sub-monitor 613 to be controlled to be stored within the sub-monitor control device 80 to the sub-control part 90. Then, after receiving this storage signal, the sub-control device 90 controls the extending and retracting driving part 615A, the turning driving part 616A, and the rotation driving part 617A, which are connection device driving means and the sub-monitor 613 can be stored automatically within the sub-monitor storage part 62. Here, the extending and retracting driving part 615A, the turning driving part 616A, and the rotation driving part 617A, which are connection device driving means, can be directly controlled by transmitting predetermined control signals from the main control device 80 thereto.

Although an instance wherein the sub-monitor 613 is placed automatically in a state enabling viewing by the player is described above, the same operations can be performed manually. For example, the player, while seated in the main seat body 50, slides the sub-monitor 613 upward from the sub-monitor storage part 62, as shown in Fig. 10, from the sub-display part 61 in a stored state in Fig. 9, and extends the second support arm 611. Then, as shown in Fig. 11, the sub-monitor 613 is placed in the vicinity of the player by pulling the sub-monitor 613 to the player-side. Next, as shown in Fig. 12, the sub-monitor 61 is turned, the relative angles of the first support arm 612 and the sub-monitor 613 are adjusted, and the image display part 613A can be placed in a position enabling viewing in the player's line of vision. Even when the sub-monitor 613 is moved manually into a position enabling viewing by the player as such, the sub-monitor 613 becomes mobile when, for example, the game status changes due to a predetermined trigger, such as the medal insertion detector 735 detecting the insertion of a predetermined number of medals, which is a game medium, and the storage part cover is opened according to this game status.

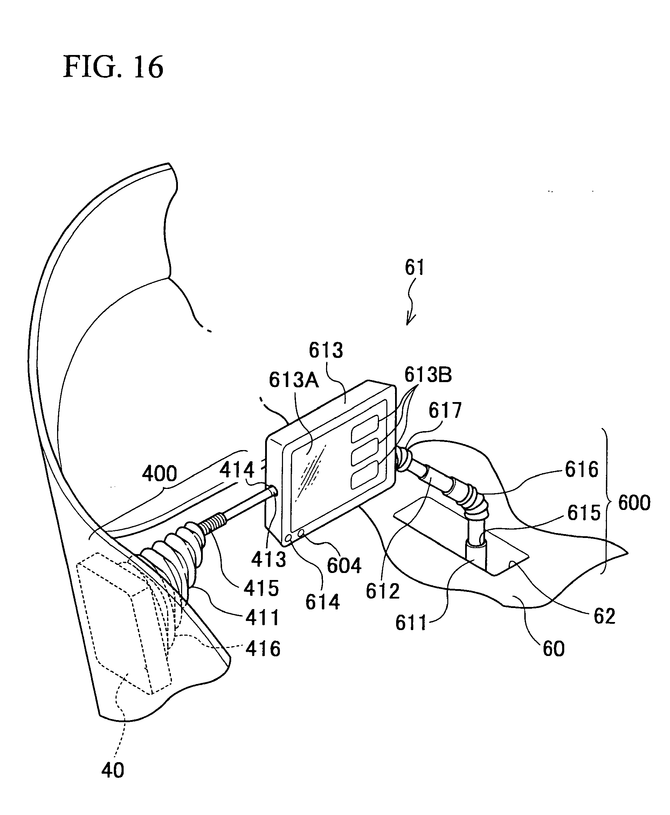

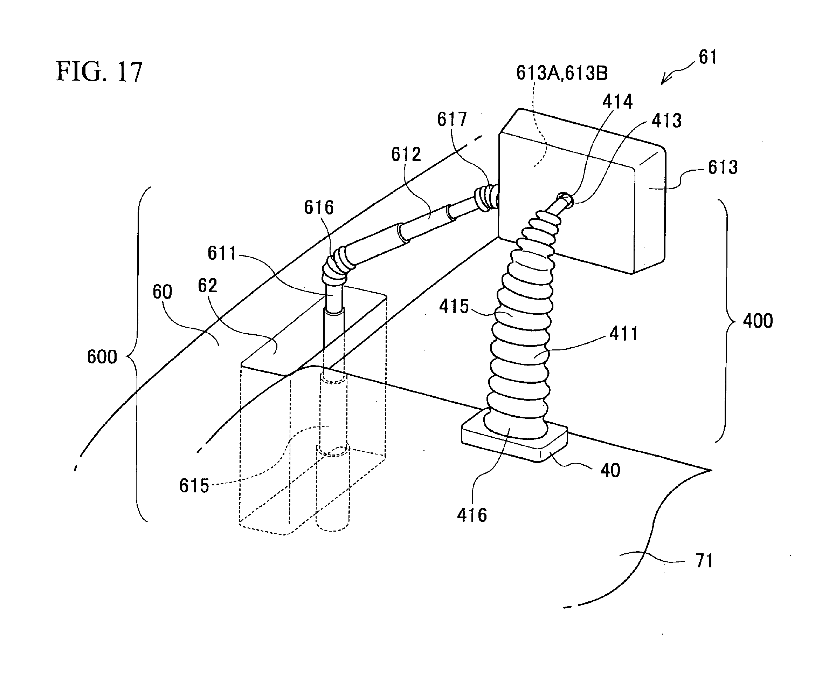

Fig. 16 and Fig. 17 are perspective view showing a state wherein the sub-monitor 613 which is placed in a position enabling viewing is held by the holding device 400.

The holding device 400 in Fig. 16 includes a holding rod 411, a holding device storage part 40 for storing the holding rod 411, and an engaging part 413 which is placed at one end of the holding rod 411.

The holding rod 411 is an accordion-shaped component which can be extended and retracted. The one end is connected to the side of the terminal device 30 which is opposite of the side to which the connection device 600 is fixed, to enable turning. The engaging part 413 is engaged to the engaged part 414 which is formed on the side surface opposing the surface to which the connection device 600 is connected. Through this, the holding device 400 holds the sub-monitor 613, which is supported in a cantilevered-state by the connection device 600, in a position enabling viewing by the player. The holding device further includes an extending and retracting device 415, which is placed in the holding rod 411, for extending and retracting the holding rod 411, and a turning device 416, which is connected to the holding rod 411, for turning this holding rod 411. The extending and retracting device 415 extends the holding rod 411 which is stored in the holding device storage part 40 and the turning device 416 turns the holding rod 411 such that the engaging part 413 engages with the engaged part 414.

By the foregoing configuration, the holding device 400 can engage with the sub-monitor 613 which is held in a cantilevered-state by the connection device 600 in a state enabling play, automatically, from a state of being stored within the holding device storage part 40 such that the player can be seated separately from the sub-monitor 613 during a normal state, and move the sub-monitor 613 such as to hold this state by the extending and retracting device 415 and the turning device 416, which are holding device driving means for driving the holding device 400.

In addition, the holding device 400 can automatically separate from a state of being engaged with the sub-monitor 613 and be stored within the holding device storage part 40. Here, the extending and retracting device 415 and the turning device 416, which are holding device driving means, can be controlled directly by transmitting predetermined control signals from the main control device 80.

Here, as a trigger for driving the holding device 400, the driving of the extending and retracting device 415 and the turning device 416 can begin when, for example, the position sensor 604 or the like detects that the sub-monitor 613 is placed in a state enabling viewing by the player. For example, if the position sensor 604 detects that the sub-monitor is in a state enabling play, the main control device 80 transmits an engagement signal which instructs the holding device 400 to engage-control and hold the sub-monitor 613 to the sub-control device 90. Upon receiving this engagement signal, the sub-control device 90 controls the extending and retracting device 415 and the turning device 416, which are holding device driving means, and the engaging part 413 can be engaged with the engaged part 414 which is provided in the sub-monitor 613.

In addition, when an input instructing game termination is received by the input operation part 72, the main control device 80 transmits a separation signal for instructing the engaging part 413 to be separation-controlled from the engaged part 414 to the sub-control device 90. Upon receiving this separation signal, the sub-control device 90 controls the extending and retracting device 415 and the turning device 416, which are holding device driving means, and the engaging part 413 can be separated from the engaged part automatically. Here, the extending and retracting device 415 and the turning device 416 can be controlled directly by transmitting predetermined control signals from the main control device 80.

The holding device 400 in Fig. 17 includes a holding rod 411, a holding device storage part 40 for storing the holding rod 411, and an engaging part 413 which is placed in one end of the holding rod 411.

The holding rod 411 is an accordion-shaped component which can be extended and retracted. The one end is connected to a table 71, described hereafter, to enable turning. The engagement part 413 is engaged with an engaged part 414 which is formed on the surface on the sub-monitor 613 opposite of the surface on which the image display part 613A is placed. In this way, the holding rod 411 can hold the sub-monitor 613 in a position enabling viewing by the player and hold the sub-monitor 613 so as to resist the force of pressing on the touch-panel part 613B which is placed in the image display part 613A.

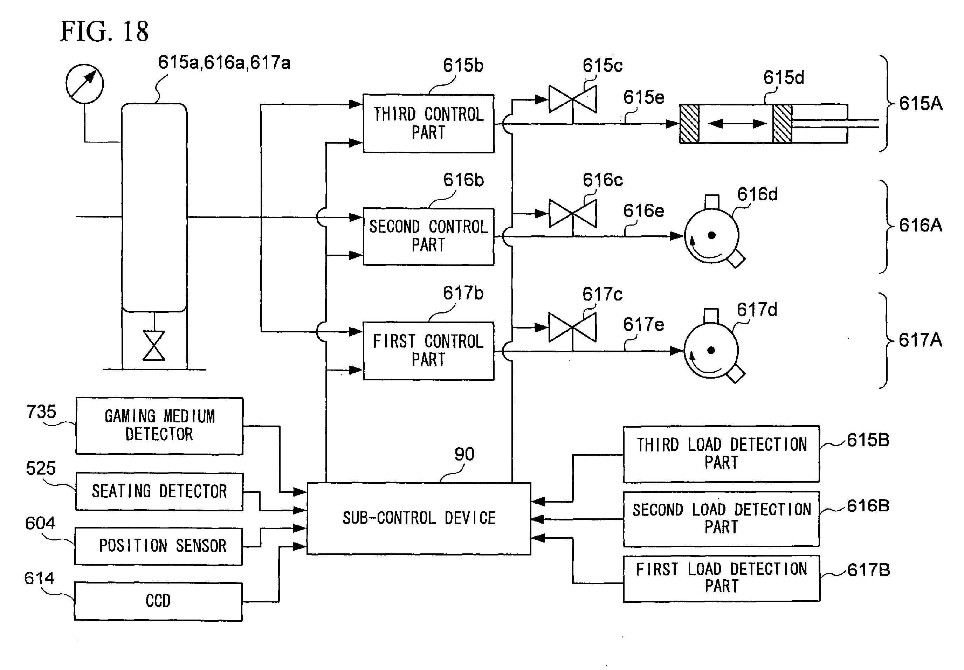

The driving device for driving the connection device 600 is explained using the block diagram in Fig. 18.

The rotation driving part 617A is a driving device utilizing air-pressure. This rotation driving part 617A includes an air-pressure generation part 617a, a first control part 617b, a first safety valve 617c, a first operation part 617d, and a first ventilation pipe 617e. The air-pressure generation part 617a generates air pressure. The first control part 617b controls the generated air pressure at a predetermined pressure. In addition, this air-pressure generation part 617a also act as the air-pressure generation part 616a, 615a. This controlled air-pressure is carried to the first operation part 617d through the first ventilation pipe 617e. The first operation part 617d converts the air-pressure carried by the first ventilation pipe 617e into rotation-direction motion and rotation-drives the sub-monitor 613. The first load detection part 617B detects the load applied to the rotation driving part 617A, and if this load is greater than the predetermined load, a signal notifying that a load exceeding the predetermine load is being applied to the rotation driving part 617A is output to the sub-control device 90. Upon receiving this signal, the sub-control device 90 transmits a signal for opening the first safety valve 617c, placed in the first ventilation pipe 617e, to the first safety valve 617c. Upon receiving this signal, the first safety valve 617 is opened and reduces the air-pressure carried to the first operation part 617d.

The turning driving part 616A includes an air-pressure generation part 616a, a second control part 616b, a second safety valve 616c, a second operation part 616d, and a second ventilation pipe 616e. The second operation part 616d converts the air-pressure to a rotation-direction motion and turn-drives the first support arm 612.

The extending and retracting driving part 615A includes an air-pressure generation part 615a, a third control part 615b, a third safety valve 615c, a third operation part 615d, and a third ventilation pipe 615e. The third operation part 615d converts the air-pressure to an extending and retracting-direction motion and extending and retracting-drives the second support arm 611. The turning driving part 616A and extending and retracting driving part 615A are controlled in the same way as the foregoing rotation driving part 617A.

By controlling the connection device 600 in this way, the air-pressure at the driving part 615A, 616A, and 617A are reduced automatically, even when, for example, the player's body is caught between the sub-monitor 613 and the terminal device 30 or the like. Through this, injuries to the player can be prevented.

For example, such as an air-damper may be placed in the vicinity of the extending and retracting driving part 615A. In this case, the storage speed of the sub-monitor 613 to the sub-monitor storage part 62 can be prevented from becoming excessively fast and injuries such as the player's hand getting caught by the sub-monitor 613 while storing can be prevented.

In addition, for example, if the sub-monitor 613 is configured to release the sound of air being released when storing the sub-monitor 613, the player will acknowledge that the sub-monitor 613 is being stored and this will effectively prevent injuries to the player.

In addition, by controlling as such, excessive loads being applied to the extending and retracting driving part 615A, turning driving part 616A, and rotation driving part 617A can be prevented. Through this, malfunctions and the like of the extending and retracting driving part 615A, turning driving part 616A, and rotation driving part 617A can be prevented. Here, as in the foregoing, by controlling respective driving parts according to the size of the load and the circumstances under which the load is applied, warning of excessive pressing of the sub-monitor 613 by the foregoing predetermined sound and reduction of the pressing force can be achieved.

For example, if the touch-panel is press-operated and the load applied to any one of the driving parts exceeds the predetermined lead, the sub-monitor 613 can be moved to safety by opening any one of the safety valves. Here, if configurations are made such that the sound of air being released is generated when any one of the safety valves are opened, the foregoing warning through sound and moving of the sub-monitor 613 to safety to reduce the pressing force can be performed simultaneously.

A sub-control device 90 which is connected by wireless LAN to the main control device 80 and a plurality of board storage slots 97 which configure this sub-control device 90 are provided within the side unit 60.

The sub-control device 90 controls a transmission part 64, for transmitting game images to the sub-display part 61, and the traveling part 32, based on instructions from the main control device 80, described hereafter, and transmits the signals input by the input operation part 72 (described hereafter) to the main control device 80. The transmission of game images from the transmission part 64 to the sub-monitor613 can be wired or wireless.

On the upper part of the board storage slots 97, a cover part 971 is provided to open and close freely. By opening the cover part 971 and inserting a terminal control board 972 from above, as shown in Fig. 2, the terminal control board 972 can be attached to the board storage slot 97.

The back-side of the seat shell 70 extends upward and can support the back rest 53 and the head rest 54. In addition, speakers 75 are provided on both sides of the head rest 54 of the seat shell 70.

The back-sides of the side surfaces of the seat shell 70 extends upward, such that the player seated in the main seat body 50 cannot be viewed by other players.

A table 71 is attached from one side surface of the main seat body 50 to the front surface, on the upper edge of the seat shell 70. The space beneath this table 71 accepts the leg rest 521 and the foot rest 52 when the main seat body 50 is placed in bed mode.

The input operation part 72 is provided in the vicinity of the side arm 55 on the table 71, or in other words, a position wherein the player can perform operations while seated in the main seat body 50, and includes a keyboard, a jog dial and the like. A card slot 721 for inserting credit cards and membership cards is provided in this input operation part 72, and a sensor not shown for detecting the insertion of the card is installed.

Although the input operation part 72 is provided on the table 71 in the present embodiment, this is not limited thereto, and can be provided as a touch-panel part 613B on the image display part 613A which is placed in the sub-monitor 613.

A medal insertion part 734, a medal insertion detector 735 which is placed in the vicinity of the medal insertion part 734 and detects the insertion of the medal, a medal payout opening 731 from which medals are paid out from a medal collection part 73 provided within the side unit, and a medal receiving part 732 for receiving the medals which are paid out are provided below the table 71 and in front of the side arm 55. A holder, not shown, for attaching a medal storage container 733 is provided in the medal reception part 732. For example, predetermined odds are stipulated to the participants of a certain event (win/loss of horse-racing, combat, etc.), much like a book-maker, and the player places a bet on a desired object. Then, medals are paid out according to the odds or the like, based on the win/loss results. The prize resulting from this book-maker is not limited to medals and can be items within the game environment.

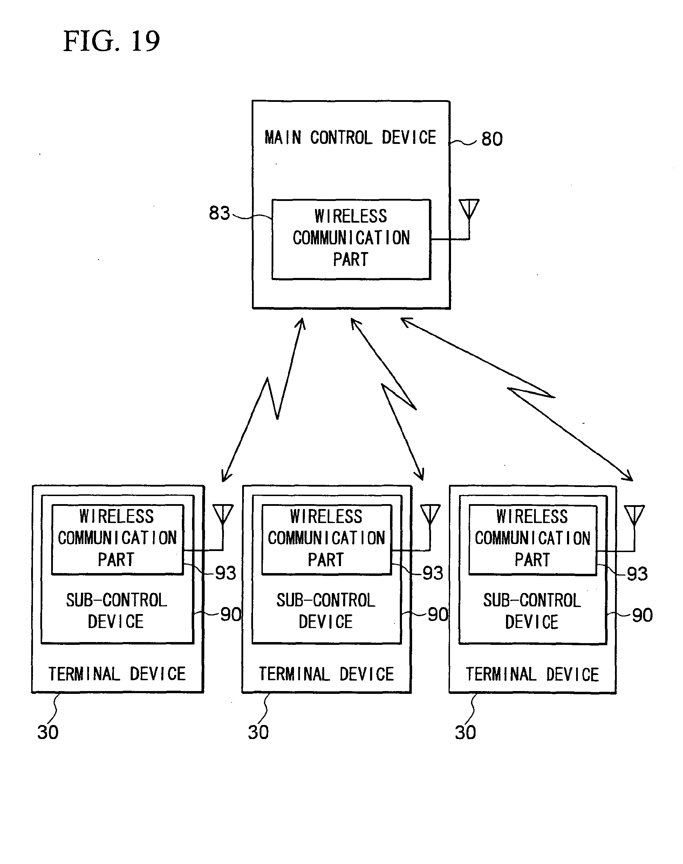

Fig. 19 is a block diagram showing the entire configuration of the game machine 1.

In this game machine 1, the main control device 80 of the main game machine body 20 has a wireless communication part 83 and the sub-control device 90 of the terminal device 30 has a wireless communication part 93. These wireless communication parts 83 and 93 can be interconnected by a wireless LAN, and thus, the transfer of voice data and character data can be performed between the main control device 80 and the sub-control device 90. Configuration of the Main Control Device

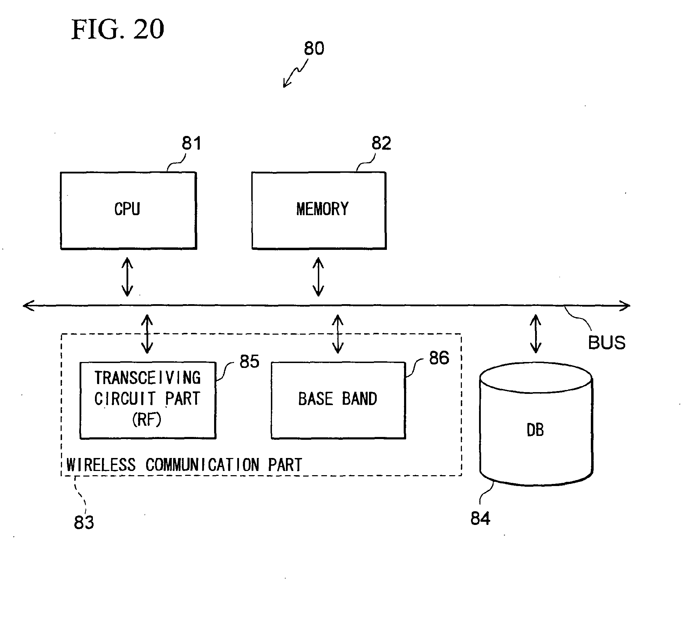

Fig. 20 is a block diagram showing the configuration of the main control device 80.

The main control device 80 has a CPU 81 as a control means, a memory 78, a wireless communication part 83 and a database 84 as a memory part, which are connected to a data bus BUS.

The wireless communication part 83 includes a transceiving circuit part (RF) 85 for transmitting and receiving signals with the sub-control device 90, and a base band processing part 86 for converting RF (Radio Frequency) signals received by the transceiving circuit part 85 into base band signals and also converting base band signals to be transmitted into RF signals.

The database 84 is a circuit board which includes a memory part to which a game program is stored or a storage medium (for example, a hard disk or ROM cassette) to which the game program is stored.

Specifically, a slot to which these circuit boards and storage mediums can be attached and removed is provided in the main control device 80. By attaching and removing these circuit boards and storage mediums from the slot, the game program stored to the database 84 can be replaced, accordingly, and other game programs can be executed. Replacing the game program is not limited to that via hardware, as such, and software can be replaced directly by downloading via a communication circuit.

CPU 81 transmits and receives data with the sub-control devices 90 of each terminal device 30, via the wireless communication part 83, by the procedure below.

Specifically, the CPU 81 converts data into packet data when transmitting data to the sub-control device 90 of the terminal device 30. At this time, the IP address of the identified terminal device 30, which is the destination, is added to the package data.

In addition, the CPU 81 identifies the terminal device which is the transmission source of the data when receiving data from the sub-control device 90 of the terminal device 30, based on the IP address added to the packed data.

The foregoing CPU 81 executes the game program and performs various processing as a result. In other words, the CPU 81 reads the game program stored in database 84 to the memory 82 and runs the game according to this game program.

Specifically, the CPU 81 receives data including game input data, described hereafter, respectively, from the plurality of terminal devices 30, and generates a single game data according to the game program, based on these data. Then, the CPU 81 generates image data which is shared with all of the terminal devices 30, based on the generated single game data, and outputs this data to the main display device 22.

Here, the single game data includes a plurality of operation character data which can be moved within the single game field generated according to the game program, based on the respective game input data of the plurality of terminal devices 30, and the positional data of this plurality of operation characters.

If a plurality of game input data is received from a plurality of terminal devices 30, the CPU 81 identifies the terminal device 30 which transmitted the game input data, based on the IP address, and moves the operation character of this identified terminal device 30 based on this game input data.

Furthermore, if the positional data of operation character of the identified terminal device 30, out of the plurality of terminal devices 30, meets predetermined conditions, the CPU 81 transmits, to the identified terminal device 30, movement signal data which designates the position of the terminal device 30.

In addition, during the game, the CPU 81 extracts the game program, information expressing the status corresponding to the time-line in the game field at the time (namely, information expressing events and the like occurring in the game field) from the database 84 and transmits this to the terminal device 30, which is the request source, via wireless LAN. In addition, the CPU 81 receives information expressing the operation results of the player from each terminal device 30 and stores this in the memory 82.

The CPU 81 runs the game and stores the progress results of the game program to the database 84, based on the information expressing the operation results of the player stored to the memory 82.

Here, the information expressing the operation results of the player are, for example, selection results by the player from a selection shown to the player via the terminal device 30, based on the progress of the game program, or the results of the operation performed by the player of the character appearing in the game, and is information transmitted from the terminal device 30 as a result of the player operating their respective terminal devices 30. Other players can check the progress status of the current game stored to this database 84 (for example, high-score information, etc.)

### Configuration of the Sub-Control Device

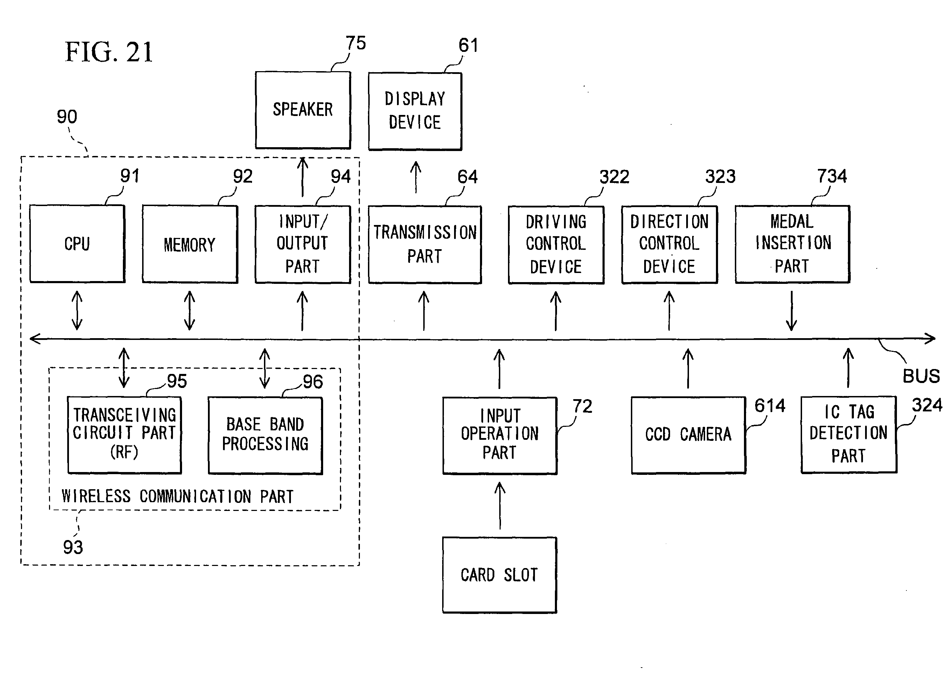

Fig. 21 is a block diagram showing the configuration of the sub-control device 90.

The sub-control device 90 has a CPU 91, a memory 92, a wireless communication part 93, an input and output part 94 which is the interface with the speaker 75, and a transmission part 64 which is an interface with the sub-monitor 613, which are connected to a data bus BUS.

The wireless communication part 93 includes a transceiving circuit part (RF) 95 for transmitting and receiving signals with the main control device 80, and a base band processing part 96 for converting RF (Radio Frequency) signals received by the transceiving circuit part 95 into base band signals and also converting base band signals to be transmitted into RF signals.

The CPU 91 transmits and receives data with the main control device 80, via wireless communication part 93, by the procedure below.

Specifically, the CPU 91 divides data into packet data when transmitting data to the main control device. At this time, the IP address of the terminals device 30 which is the transmitting source is added to the packet data as an identifier for identifying respective terminal devices 30.

In addition, the CPU 91 receives the packet data if the IP address added to the packet data matches the IP address of the terminal device, when receiving data from the main control device 80, and destroys the packet data if it does not match.

The CPU 91 not only transmits and receives signals with the main control device 80, via the wireless communication part 93, but also controls the sub-display part 61, tire driving control device 322, and tire direction control device 323, based on the input signals from the input operation part 72, the CCD camera 614, and the IC tag detection part 324.

Specifically, the IC tag detection part 324 reads positional information from the IC tag 211 and outputs this as current-positional data. The CPU 91 transmits the game input data (data regarding character information, identified selection information, etc.) according to the input on the input operation part 72, the face image data taken by the CCD camera 614, and the current-positional data from the IC tag detection part 324 to the main control device 80.

Furthermore, when receiving movement signal data which designates the position of the terminal device 30 from the main control device 80, the CPU 91 grasps the position of the terminal device 30 on the play area 21, based on current-positional data from the IC tag detection part 324, controls the tire driving control device 322 and the tire direction control device 323 of the traveling part 32, and moves the terminal device 30 to the position designated by the movement signal data.

In addition, the CPU 91 can drive the tire driving control device 322 and the tire direction control device 323 of the traveling part 32, according to the game input data which is input by operating the input operation part 72.

The CPU 91 executes an operation program which is stored to the memory 92, according to input from the input reception means, based in the program executed by the CPU 81, and performs various processing. Here, the input operation part 72, the touch-panel part 613B and various switches not shown can be given as examples of the input reception means. In addition, the CPU 91 controls the sub-monitor 613 and the like, based on the status of the game run by the game program.

In other words, when receiving a game program or information expressing the status corresponding to the time-line in the game field at that time from the main control device 80, after storing information on the game program and the like, transmitted from the main control device 80, to the memory 82, the CPU 91 presents the various occurrences, such as events, occurring in the game field at this time, in the image display part 613A of the sub-monitor 613 and outputs sound effects from the speaker 75.

In addition, by operating the input operation part 72 while viewing the game content (image, letter information, etc.) shown in the image display part 613A of the sub-monitor 613, the players using respective terminal devices 30 can operate the characters shown in the main display device 22, participate in the progress of the game by operations such as selecting from a selection by letters, and move the terminal device 30 to an identified position on the play area 21.

The image data generated in the main control device 80 is output from the sub-monitor 613 by the procedure below. When an RF signal is received from the main control device 80, the transceiving circuit part 95 applies this RF signal to the base band processing part 96 and converts the RF signal to the base band signal. The base band processing part 96 outputs this base band signal to the sub-monitor 613, via the transmission part 64. Then, this base band signal is output and shown as an image in the image display part 613A.

In addition, voice signals from the main control device 80 are output as voice from the speaker 75 by the same operation as the foregoing. In other words, the transceiving circuit part 95 converts the RF signal to a base band signal by the base band processing part 96 when receiving an RF signal from the main control device 80. The base band processing part 96 outputs this base band signal as voice from the speaker 75 by outputting the signal to the speaker 75, via the input and output part 84.

In addition, the CPU 91 executes operation programs and the like based on input from the input operation part 72 and external input such as insertion of the predetermined number of medals, detected by the medal insertion detector 735. Then, the CPU 91 controls the sub-monitor 613 and the like, based on the status of the game executed by the program.

For example, if the medal has not yet been inserted, the game status is set to non-playing state and the movement prohibition means controls the sub-monitor 613 and places it in a movement prohibited state, wherein the movement of the sub-monitor 613 to the outside of the sub-monitor storage part 62 is prohibited. Specifically, control for maintaining the storage part cover 66 in a closed state and control for locking the connection device 600 either physically or electronically such that it cannot be driven are performed. Then, when the medal insertion detector 735 detects the insertion of a predetermined number of medals, which is a game medium, the game status becomes a play state, and the movement prohibition means releases the sub-monitor 613 from its movement prohibited state and controls the sub-monitor 613 to enable movement. Specifically, control for opening the storage part cover and enabling the sub-monitor 613 to be moved outside of the sub-monitor storage part 62, and control for releasing the lock on the connection device 600 and enabling the sub-monitor 613 to move are performed.

In addition, as described above, the sub-monitor 613 is controlled such that game images cannot be shown in a non-play state and controlled such that game images can be shown when a play state is entered. Here, external input refers particularly to predetermined signals including input signals from the input operation part 72, and for example, the detection signal of the insertion of a predetermined number of medals, which is a game medium, from the medal insertion detector 715, the input signals of various switches, and the detection signal from the seating detector 525 when the seating of the player is detected, are given.

In addition, as stated above, by receiving predetermined signals from the main control device 80, the sub-control device 90 controls the connection device driving means and the holding device driving means, and drives the connection device 600 and the holding device 400.

### Configuration of the Game Program

Next, a game program provided by the game machine 1 is explained. This game program is a role-playing game which is set in a fictional game field which runs continuously by its own time-line. A plurality of towns exists in this fictional game field, and guilds are formed respectively in each town.

Each player becomes an adventurer, visits each town, and aims to clear numerous events (quests) waiting in each guild by operating the avatar.

On the other hand, this game program generates a plurality of large events (macroquests) in the game field and forms a large plot to the story. Each player becomes involved in the large events (macroquests), while solving the foregoing events (quests), and solves the macroquest with other players while sometimes cooperating, sometimes fighting, and sometimes competing with each other.

This game program changes the plot of the game field by the operations of the terminal devices 30 of the players (game-play). In other words, the accumulation of the game-play (adventures) of each individual player creates the history of this game field.

In this way, this game program is a role-playing game wherein a plurality of players can all experience the flow of history in a fictional world. In addition, in this game field, history is created by a unique time-line which cannot be stopped, and therefore, the people appearing within this game field are not immortal, but will grow old as in the real world.

The game program is configured to write the name of the player who has solved an event in the macroquest or achieved accomplishments such as winning in a competition against another player to a chronology which is stored to the database 84. Through this, players who were successful in the macroquest can leave their name in the history of the game field.

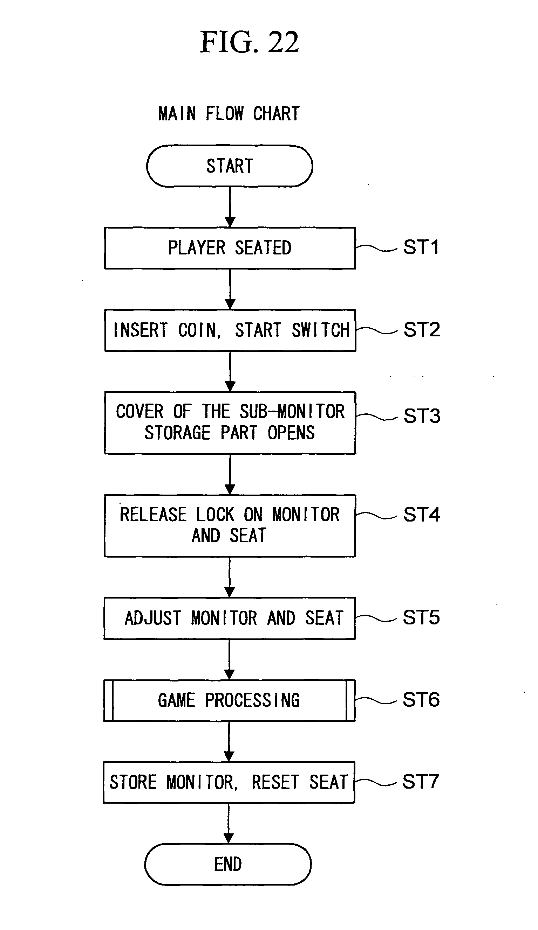

The operation of the game machine 1 is explained, with reference to the main flow chart shown in Fig. 22.

In ST1, each player selects a terminal device 30 of their choice from the terminal devices 30 placed on the play area 21 and sits in the seat 31 of the selected terminal device 30. Next, in ST2, each player inserts a medal, which is one of the game mediums, into the medal insertion part 734 and presses the start switch. Then, in ST3, the storage cover 66 opens and the sub-monitor 613 enters a state enabling movement outside. Then, in ST4, the locks of the sub-monitor 613 and the seat 31 of the game machine 1 are released and, in ST5, the player can adjust the mode of the seat 31. Next, the sub-monitor 613 is automatically pulled out from the sub-monitor storage part 62 of the side unit 60 to the front of the player, which is a position enabling viewing by the player. Here, various cards, such as credit cards and prepaid cards, electronic money, and various points are given as examples of game media. In addition, other physical insertion includes predetermined actions equivalent to payment of electrical money or points by a method which can be acknowledged electrically.

In ST6, the game machine 1 executes a game processing, described hereafter. When the game is completed, in ST7, the game machine 1 stores the pulled-out sub-monitor 613 in front of the player into the sub-monitor storage part 62 and also returns the mode of the seat 31 to seat mode.

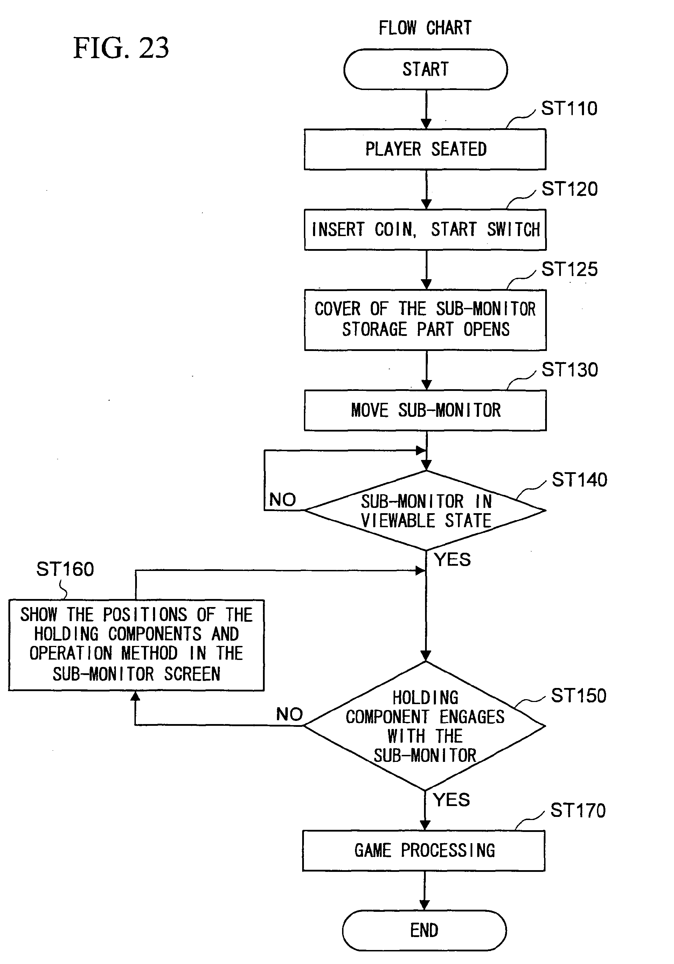

Fig. 23 is a flowchart showing one example of the pull-out operation of the sub-display part 61.

As explained above, in ST110, each player selects a terminal device 30 of their choice from the terminal devices 30 placed on the play area 21 and sits in the seat 31 of the selected terminal device 30. The seating detector 525 detects that the player is seated. Next, in ST120, each player inserts a medal into the medal insertion part 734 and presses the start switch. Then, in ST125, the storage cover 66 opens and the sub-monitor 613 enters a state enabling movement outside. Then, in ST130, the sub-monitor 613 of the game machine 1 automatically pulled outward from the sub-monitor storage part 62, placed in front of the player, which is a position enabling viewing by the player, and rotation-driven such that the image display part 613A faces the player-side. In ST140, the position sensor 604, placed in sub-monitor 613, detects the position of the player and detects whether the sub-monitor 613 is placed in a state enabling viewing by the player. If the sub-monitor 613 is not placed in a state enabling viewing by the player, the sub-monitor 613 is driven again to place it in a state enabling viewing by the player.

If, in ST150, the sub-monitor 613 is detected to be in a state enabling viewing by the player, the holding device 400 is driven to engage with the sub-monitor 613. If the holding device 400 is engaged with the sub-monitor 613, the game processing is executed in ST170. Here, if the holding device 400 is not driven to engage with the sub-monitor 613 regardless of the sub-monitor being in a state enabling viewing by the player, the position of where the holding device 400 is placed, the operation method for driving the holding device 400, and the like are shown in the sub-monitor 613. In this way, the player is notified that the holding device 400 is not engaged with the sub-monitor 613 and predetermined operations for engaging the holding device 400 with the sub-monitor 613 can be prompted.

Although the holding device 400 engages with and holds the sub-monitor 613 automatically, if the holding device 400 is not engaged with the sub-monitor 613 automatically because of a malfunction of some sort, the position of the holding device 400 and the operations necessary for engaging the holding rod 411 with the sub-monitor 613 are shown in the image display part 613A of the sub-monitor 613. Then, the player can be prompted to engage the holding device 400 with the sub-monitor 613. As a means for prompting the engagement of the holding device 400, an illuminating part not shown, placed in the vicinity of the holding device can be flashed on and off.

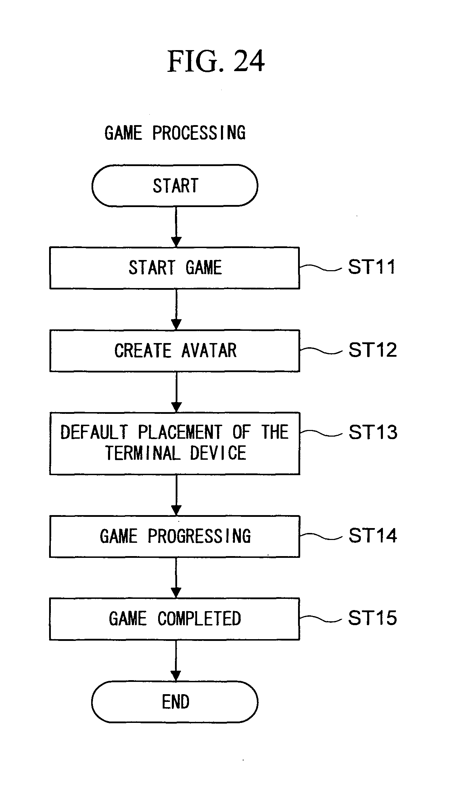

Fig. 24 is a flowchart of the game processing. When the game is started in ST11, the game program creates an avatar of the player on ST12.

In other words, the game program shows an avatar creating screen in the image display part 613A of the sub-monitor 613. In this avatar creation screen, the player creates an avatar, which is an alter-ego of the player, when participating in the game program. When an image of the players face is taken by the CCD camera 614 and the player enters personal information and the name to be used in the game field to the input operation part 72, the game program creates an avatar based on this information and registers it to the database 84 of the main control device 80.

In ST13, the game program places the terminal device 30 in which the player is seated in the default position on the play area 21.

In other words, the towns in the game field are surrounded by the ocean or forests, or are large cities. The play area 21 includes a plurality of sub-areas 212, such as a city area 212A, an ocean area 212B, and a forest area 212C, as stated earlier. These sub-areas 212 are quasi-spaces corresponding to the environment of the towns in the game field.

Therefore, the game program sets the town each player is in, in the game field, and moves the terminal device of the player to the sub-areas 212, corresponding to the town in which each player is, when the game begins. Alternatively, the terminal device 30 of the player is moved according to the operations of each player of the input operation part 72, and the town in which the player is in the game field is set according to this movement.

As explained hereafter, in ST14, the game program runs the game according to a unique time-line, generating macroquests in which a plurality of players participate and quests in which only one player participates, and completed the game in ST15.

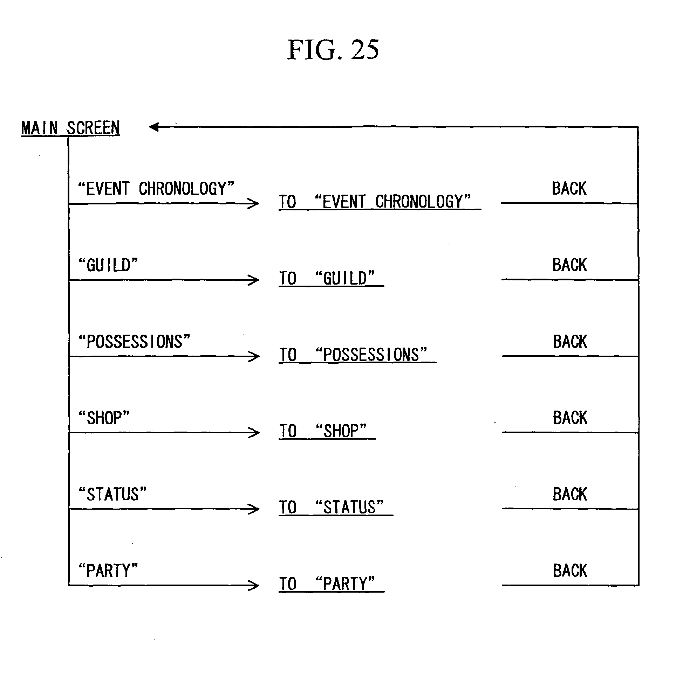

Fig. 25 is a flowchart of each player in the game program.

Each player can perform an event chronology processing, guild processing, possessions processing, shop processing, status processing, and party processing.

When the player selects "event chronology processing", the game program shows the event chronology in the image display part 613A of the sub-monitor 613 by reading the event chronology from the database 84 in the main control device 80 and performing event chronology processing.

In this event chronology, the respective dates and quest name of each quest solved in the game field is shown. Furthermore, when the player selects a quest name (event name), the game program shows the details of the selected event. Here, the details of the event are, for example, showing the player who solved the quest most quickly, if the winner is the player who solves the event (quest) most quickly, and shows the party if the winner is the party with the most number of cooperating players who have solved the event (quest).

When the player selects "guild", the game program performs a guild processing and shows a guild screen in the image display part 613A of the sub-monitor 613. In this guild screen, the player can be the quests the player can try in the guild and select to go to another town in the game field.

When the player selects "quest" in the guild screen, the game program shows a list of selectable quests in the image display part 613A of the sub-monitor 613. If the player selects the desired "quest" from this list, the game program executes the selected quest.

When the player selects "Go to another town" in the guild screen, the game program shows a list of towns which can be selected as a transfer destination in the image display part 613A of the sub-monitor 613. If the player selects a desired town, the game program moves the player to the selected town. When the game program moves the player to another town, the terminal device of each player is moved to the sub-areas 212 of the corresponding transfer destination town.

The player can select menus such as "guild", "possessions", and "shop", even in the transfer destination town.

When the player selects "possessions", the game program performs a possessions processing and shows a possessions (list of contents) screen, of weapons, tools, shoes, and the like in the image display part 613A of the sub-monitor 613. If the player selects a specific possession in this possessions (list of contents) screen, the game program shows a plurality of items included in the selected possessions in the image display part 613A of the sub-monitor 613. The player selects the desired item from these items and either "wear" or "dispose of" the selected item.

When the player selects "shop", the game program performs a shop processing and shows a shop screen in the image display part 613A of the sub-monitor 613. This shop screen is a screen for barter exchanging items in possession or acquiring information from the shop owner, and the player can select either "listen" or "exchange".

When the player selects "exchange" in the shop screen, the game program shows a list of products in the image display part 613A of the sub-monitor 613. The player can select a desired item from this product list.

When the player selects the desired item, the game program shows the items possessed by the player for exchanging with the selected desired item. When the player selects an item in possession for exchange, the game program shows the item posses by the player and the price thereof in the image display part 613A of the sub-monitor 613.

When the player selects the desired item for exchange from the items in possession, shown here, the desired items in possession to be exchange are collected, and the player selects "execute", the game program executes an exchange of the desired item and the desired item in possession to be exchanged.

On the other hand, if the player selects "listen" in the shop screen, the game program shows "rumors" in the image display part 613A of the sub-monitor 613. The player can acquire information in the game field by the "rumors" shown in this screen.

When the player selects "status", the game program performs a status processing and shows a status screen in the image display part 613A of the sub-monitor 613. This status screen shows the results of the player's accomplishments in the game field, the possessions thereof and the like. Specifically, it shows name, title, fame, power, intelligence, number of monsters slain, number of quests cleared, number of people saved, and the like.

If the player selects any one of the items above, the game program shows the rankings related to this item in the image display part 613A of the sub-monitor 613.

When the player selects "party", the game program performs a party processing and shows the names of fellow players in the image display part 613A of the sub-monitor 613, if there are fellow players, and furthermore, shows "read mail", "send mail", "exchange item", "view status" and the like.

By selecting any one of the items above, the player can send and receive mail with fellow players, exchange items with fellow players, and view the status of fellow players.

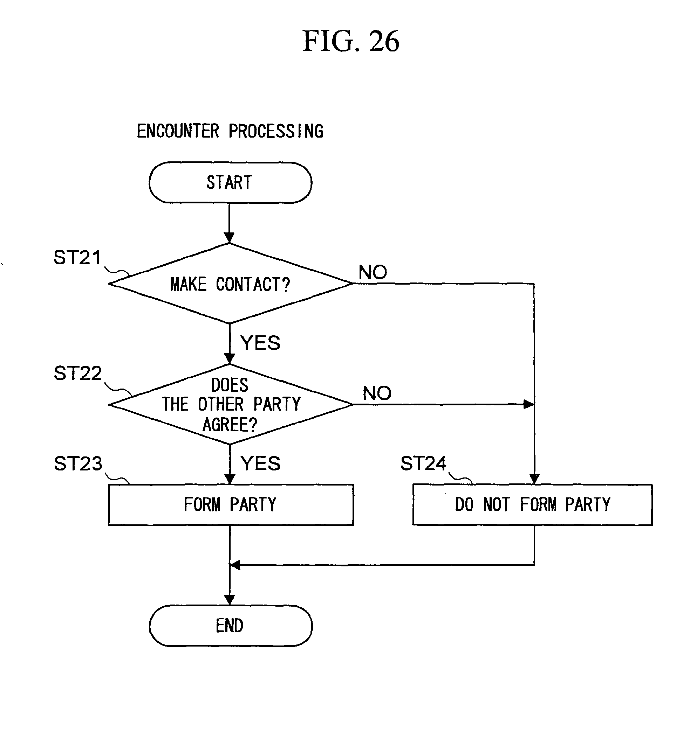

Fig. 26 is a flowchart of the encounter processing when the player encounters another player on the game field.

In the progress of the game in ST14, the game program executes an encounter processing when the player encounters another player on the game field.

In other words, in ST21, an encounter screen is shown in the image display part 613A of the sub-monitor 613, and the player is prompted to select whether to make contact.

If the player selects "No", the process returns to ST24 and the encounter processing is terminated without forming a party. On the other hand, if the player selects "Yes", the process moves to ST22, and the game program transmits mail to the other player, and shows that the player is being invited to become a fellow player in the image display part 613A of the sub-monitor 613 of this player. Then, the game program prompts the other player to select whether to accept the invitation.

If the player receiving the invitation selects "Yes", the process moves to ST23 and the game program transmits the selected result to the player who is the inviter, shows that the player has become a fellow player in the image display part 613A of the sub-monitor 613 of the player who is the inviter, a party is formed and the process is completed.

On the other hand, if the player receiving the invitation selects "No", the game program shows that the player could not be a fellow player to the player who is the inviter in the image display part 613A of the sub-monitor 613, and the process moves to ST24, and terminates the encounter processing without forming a party.

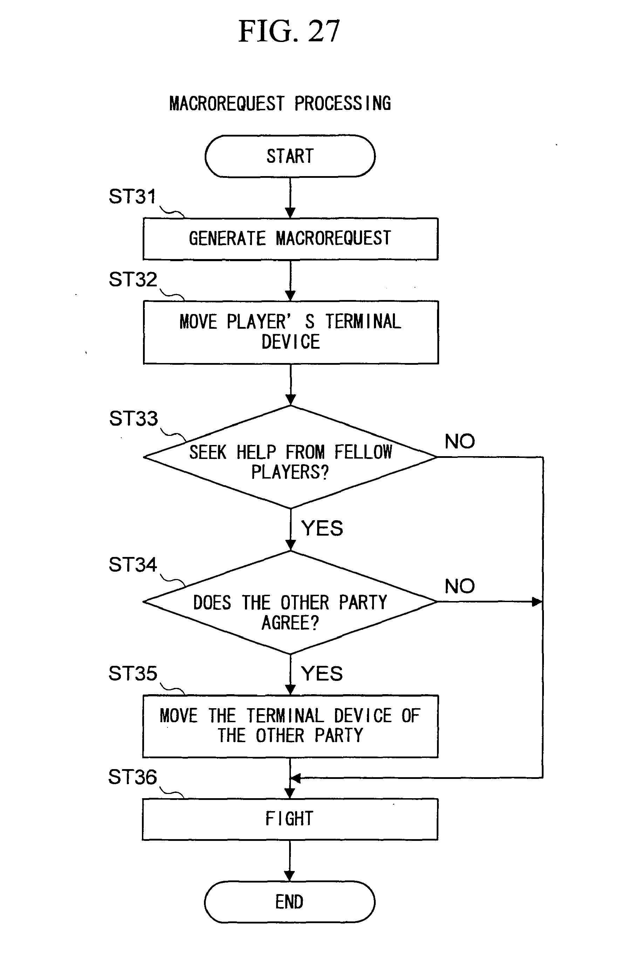

Fig. 27 is a flowchart of the macroquest processing when a macroquest is generated in the game field.

If a macroquest involving a plurality of players is generated in ST3, the game program executes a macroquest processing.

In other words, if a macroquest is generated in ST31, the process moves to ST32, shows the players involved in this macroquest in the main display device 22, also moves the terminal devices 30 of the players involved in this macroquest to the city area 212A in front of the main display device 22, and places them so that the terminal devices 30 of opposing players are close to and facing each other.

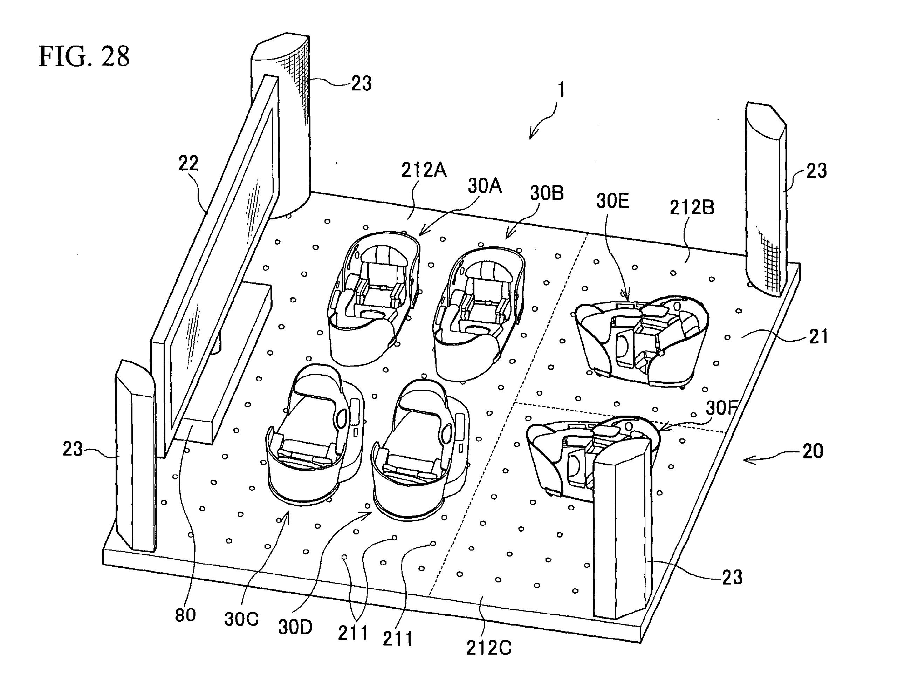

Specifically, as shown in Fig. 28, there are six terminal devices, 30A to 30F, placed on the play area 21. Of these, the players of terminal devices 30A, 30B, and 30 E are one party, and the players of terminal devices 30C, 30D, and 30F are another party. Then, each player in terminal devices 30A to 30D are caught in the macroquest in the city area 212A and are placed such that the parties oppose each other. In contrast, because the players in terminal devices 30E and 30F are respectively in the ocean area 212B and the forest area 212C, they are not involved in the macroquest, and thus, view the battle between the terminal devices 30A to 30D.

In order to clear the macroquest, the players caught in the macroquest select whether to call for help from fellow players in ST33.

If the player selects "No", the process moves to ST 36.

On the other hand, if the player selects "Yes", the process moves to ST34, the game program transmits mail calling for help to the fellow players, and shows that help is being called for in the image display part 613A of the sub-monitor 613 in the terminal device 30 of the player. Then, the game program prompts the fellow players to select whether to help the player.

If the fellow player whose help is requested selects "Yes", the process moves to ST35, and the game program transmits the selection results to the player requesting help and that the fellow player will participate is shown in the image display part 613A of the sub-monitor 613 of the player. In addition, the game program shows the status of the gathering of newly participating fellow players in the main display device 22, and the terminal devices 30 of the newly participating fellow players are moved to the city area 212A in front of the main display device 22 and placed such that the terminal devices 30 of opposing players are close to and facing each other.

On the other hand, if the player whose help is requested selects "No", the game program shows that help had been denied in the image display part 613A of the sub-monitor 613 of the player requesting for help, and the process moves to ST36.

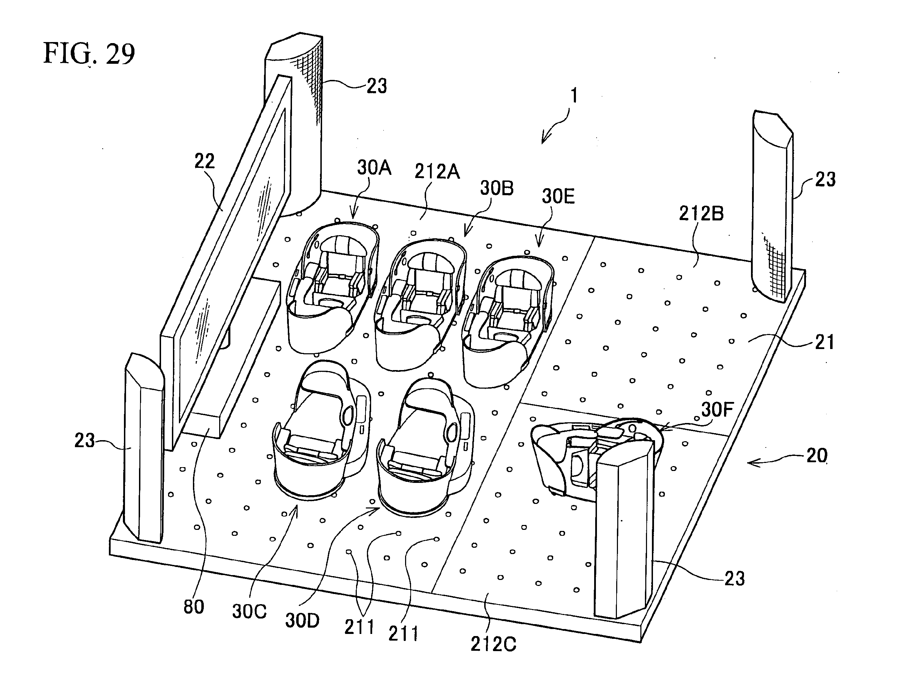

Specifically, as shown in Fig. 29, because the player in terminal device 30E is fellow players with the players in terminal devices 30A and 30B, this player's help is requested by the terminal devices 30A and 30B. The player in terminal device 30E, having agreed to help, is moved to the city area 212A and is placed in alignment with the terminal devices 30A and 30B.

On the other hand, although the player in terminal device 30F is fellow players with the players in terminal devices 30C and 30D, and this player's help is requested by the terminal devices 30C and 30D, he refuses to help and, therefore, remains in the forest area 212C.

In ST36, each player fights the opposing player or opposing party. Specifically, as shown in Fig. 29, the players of terminal devices 30A, 30B, and 30E and the players of terminal devices 30C and 30D fight in the city area 212A.

In this way, each player gets caught in a macroquest or is requested to help by fellow players caught in the macroquest, and whether to watch the battle between other players or to personally participate can be selected.

According to the present embodiment, the following effects can be attained.

According to the first aspect of the present invention, the display means is connected to the seat part by the connection rod such as to freely enable storage. Through this, for example, if a mechanism for driving the connection rod is provided, the game machine can be configured such that the display means is stored within the storage part when the game is not being played and the display means is moved to a position enabling viewing by the player when the game is played.

According to the second aspect of the present invention, the display means is connected to the storage part such as to freely enable storage thereof by the connection rod, of which one end is fixed to the seat part and the other end is connected to the display means. Through this, for example, if a mechanism for driving the connection rod is provided, the game machine can be configured such that the display means is stored within the storage part when the game is not being played and the display means is moved to a position enabling viewing by the player when the game is played.

In addition, because it is controlled to enable the presentation of game images in the display means based on the status of the game run by the game program, for example, the game machine can be configured such that game images are not shown in the display means when the game is not being played and the presentation of the game images can be allowed and the game image can be shown in the display means when the game is played. Through this, the display means can be moved to a state enabling viewing by the player and game images can be shown in the display means as well, based on the status of the game run by the game program.

According to the third aspect of the present invention, the display means is connected to the storage part such as to freely enable storage thereof by the connection rod, of which one end is fixed to the seat part and the other end is connected to the display means. Through this, for example, if a mechanism for driving the connection rod is provided, the game machine can be configured such that the display means is stored to the storage part when the game is not being played and the display means is moved to a position enabling viewing by the player when the game is played.

In addition, the movement prohibition means is controlled to release the display means from a movement prohibited state based on the status of the game run by the game program. Through this, for example, the game machine can be configured so as to place the display means in a movement prohibited state to prevent movement from the storage part when the game is not being played and release the display means from the movement prohibited state and enable the display means to be moved outward from the storage part when the game is played. In this way, the movement prohibited state of the display means can be released and the display means can be moved to a state enabling viewing by the player, based on the status of the game run by the game program. In addition, in this way, the display means can be placed in a state of being stored within the storage part, prohibiting outward movement thereof, when the game is not played, thereby preventing damage and the like due to mischievous children and the like.

According to the fourth aspect of the present invention, a pressing force reduction means for clearing the display means in a pressing direction is provided. Through this, for example, if the pressing force applied to the touch-panel part exceeds the predetermined strength, the display means is cleared in the pressing direction, and thus, damage to the display means, the connection rod and the like can be prevented.

According to the fifth aspect of the present invention, a sliding part for sliding the connection rod to the side away from the player and a biasing part for biasing the connection rod to the player-side are provided in the seat part. Through this, for example, if the player presses the touch-panel with an excessively strong force, the display means slides to the side away from the player and clears the pressing force, and thus, damage to the display means, the connection rod and the like can be prevented.

According to the sixth aspect of the present invention, a turning axis which supports the display means to enable turning and a rotation biasing part for biasing the display means to turn in the direction opposite of the turning direction of the turning caused by the pressing force are provided. Through this, for example, the display means turns and clears the pressing force and, thus, damage to the display means, the connection rod and the like can be prevented.

According to the seventh aspect of the present invention, the display means is connected to the seat part to freely enable storage within the storage part by the connection rod and a connection rod driving means which drives the connection rod is further provided in accordance to predetermined conditions having been met. Through this, for example, the game machine can be configured such that the display means stored within the storage part is automatically moved to a position enabling viewing by the player, in accordance to predetermined conditions having been met, such as when an instruction for game start is received by an input reception means such as a game start switch and the like, described hereafter, or when a seating detector, described hereafter, detects that a player is seated.

According to the eighth aspect of the present invention, the display means is connected to a connection device, of which one end is fixed to the main body part, and a driving mechanism for driving the connection device is provided in the connection device. Through this, for example, the display means which is stored within the storage part during a normal state can be moved automatically to a state enabling play and viewing by the player. In this way, the player playing the game can enjoy the game and also experience a sense of luxury.

In addition, because the display means is configured to move from a stored state to a state enabling play when an instruction for game start is input from the input reception means, for example, the display means can be configured to automatically move to a position enabling viewing by the player, when the game start switch is pressed. In this way, the player can sit down smoothly before the game begins and, at the same time, the player can experience not only a sense of luxury, but also satisfaction, because the display means moves automatically into a state enabling play, according to the will of the player and predetermined movements.

According to the ninth aspect of the present invention, the display means is connected to the connection device, of which one end is fixed to the main body part, and in addition, a driving mechanism for driving the connection device is provided therein. Through this, for example, the display means stored within the storage part during a normal state can be moved automatically into a state enabling play and viewing by the player. In this way, the player playing the game cannot only enjoy the game, but also experience a sense of luxury.

In addition, because the display means is configured so as to move from a stored state to a state enabling play when the seating of the player to the seat is detected, for example, the display means can be configured so as to move automatically to a state enabling viewing by the player. Through this, the player can sit down smoothly and, at the same time, the player can experience not only a sense of luxury, but also satisfaction, because the display means moves automatically into a state enabling play, according to the will of the player and predetermined movements.

According to the tenth aspect of the present invention, in a multi-player-type game machine in which numerous players participate, such as a multiplayer game, the connection device, of which one end is fixed to the main body part of the terminal device, is connected to the display means and a connection device driving means for driving the connection device is provided in each terminal device. Through this, for example, the display means which is stored within the storage part during a normal state can be moved automatically to a state enabling play and viewing by the player. In this way, the player playing the game cannot only enjoy the game, but also experience a sense of luxury.

In addition, the display means is configured to be movement-controlled from a stored state to a state enabling play when an instruction for starting the game is received by the input reception means. Through this, for example, when the game start switch is pressed, the display means can be configured to move automatically to a position enabling viewing by the player. Through this, the player can sit down smoothly before the game begins, and at the same time, the display means is automatically movement-controlled to enter a state enabling play according to the will of the player and predetermined movements, and thus, the player can experience not only a sense of luxury, but also satisfaction.

According to the eleventh aspect of the present invention, in a multi-player-type game machine wherein numerous players participate, such as a multiplayer game, the connection device, of which one end is fixed to the main body part of the terminal device, is connected to the display means and a connection device driving means for driving the connection device is provided in each terminal device. Through this, for example, the display means which is stored within the storage part during a normal state can be moved automatically to a state enabling play and viewing by the player. In this way, the player playing the game cannot only enjoy the game, but also experience a sense of luxury.

In addition, the display means is configured to be movement-controlled from a stored state to a state enabling play when an instruction for starting the game is received by the input reception means. Through this, for example, when the game start switch is pressed, the display means can be configured to move automatically to a position enabling viewing by the player. In this way, the player can sit down smoothly before the game begins, and at the same time, the display means is automatically movement-controlled to enter a state enabling play according to the will of the player and predetermined movements, and thus, the player can experience not only a sense of luxury, but also satisfaction.

According to the twelfth aspect of the present invention, the control means is configured to control the connection device driving means so as to store the display means which is in a state enabling play when an input instructing game termination is received by the input reception means. Through this, for example, the game machine can be configured such that the display means which is placed in front of the player is cleared from the front of the player and stored within the storage part by pressing the game termination switch. In this way, the player can leave the seat smoothly after game termination and the issue of forgetting to store the display means can be prevented.

According to the thirteenth aspect of the present invention, the control means is configured to be capable of controlling the connection device driving means when the insertion of a game medium, such as a medal, to the game medium insertion part is detected. Through this, for example, the game machine can be configured such that insertion of a game medium, such as a medal, is a condition for enabling the display means to be moved.

According to the fourteenth aspect of the present invention, for example, by moving the display means outside of the storage part by expanding the extending and retracting driving part, moving the display means to the player-side by the turning driving part and rotating the display means such that the image display part faces the player-side by the rotation driving part, the display means can be moved automatically from a state of being stored within the storage part to a state enabling viewing by the player. In this way, the display means can be moved smoothly to a state enabling play and also moved such that it is not in the way of the player.

According to the fifteenth aspect of the present invention, the game machine is configured such that the air-pressure carried to the operation part is reduced by opening the safety valve when the load detection part detects that a load greater than the predetermined load is applied to the connection device driving means. Through this, for example, when a part of the player's body is caught between a moving display means and the terminal device, the load detection part can detect the increase in load applied to the connection device driving means, and the movement of the display means can be terminated. In this way, injuries to the player can be prevented. In addition, damage due to mischief, such as holding back a moving display, can be prevented.

According to the sixteenth aspect of the present invention, the control means is configured to movement-control the display means into a state enabling play when the position detection part is placed in the display means, detects the position of the display means to the player, and the display means is not in a state enabling play. In this way, the display means can be moved into a state enabling play and viewing by the player, without fail. Even if the player moves his sitting position, this can be detected and the display means can be moved to a state enabling play.

According to the seventeenth aspect of the present invention, the display means, which is held in a cantilevered-state by the connection rod in a position enabling viewing, is configured to engage with and be held by a holding rod on the side surface opposite of the side surface to which the connection rod is connected. Here, for example, if a mechanism for driving the holding rod is provided, the display means is configured to automatically engage with the display means when the display means is moved to a state enabling viewing by the player. In this way, swaying of the display means due to the player pressing the display means or movement of the seat can be suppressed.

According to the eighteen aspect of the present invention, the game machine is configured such that the display means which is held in a cantilevered-state by the connection device is automatically held by the holding device. Through this, for example, the holding rod can be configured to engage automatically with the display means when the display means is moved to a state enabling viewing by the player. In this way, swaying of the display means, which is generated by the player's body coming into contact with the display means, can be suppressed when playing, and a problem in which the images become difficult to see due to the swaying of the display means can be alleviated.

Furthermore, the holding device can be configured to engage with the display means in a state enabling play and separate from the display means, in addition to the display means automatically being stored within the storage part, when in a non-playing state. In this way, the display means can be moved and placed so as not to interfere with the player who is sitting down, and thus, the player can sit down smoothly.

According to the nineteenth aspect of the present invention, a touch-panel part is provided on the front surface side of the display means. In this case, vibrations and swaying due to pressing by the player can be suppressed because, although the player presses the display means for input operations, the display is held by the holding device. In this way, the player can press the touch-panel firmly and perform input operation, and a problem in which the images become difficult to see due to the swaying of the display means caused by input operations can be alleviated.

According to the twentieth aspect of the present invention, because the game machine is configured such that the display means which is held in a cantilevered-state by the connection is automatically held by the holding device in the terminal device of a multi-player-type game machine in which numerous players participate, such as a multiplayer game. Through this, for example, the holding rod can automatically engage with the display means when the display means is moved to a state enabling viewing by the player. In this way, swaying of the display means generated when the player's body comes into contact with the display means is suppressed when playing and a problem in which the images become difficult to see due to the swaying of the display means can be alleviated.

Furthermore, for example, the holding device can be configured to engage with the display means in a state enabling play and separate from the display means, in addition to the display means automatically being stored within the storage part, when in a non-playing state. In this way, the display means can be moved and placed so as not to interfere with the player who is sitting down, and thus, the player can sit down smoothly.

According to the twenty-first aspect of the present invention, a touch-panel part is provided on the front surface side of the display means. In this case, vibrations and swaying due to pressing by the player can be suppressed because, although the player presses the display means for input operations, the display is held by the holding device. In this way, the player can press the touch-panel firmly and perform input operation, and a problem in which the images become difficult to see due to the swaying of the display means caused by input operations can be alleviated.

According to the twenty-second aspect of the present invention, the holding device is configured to hold the display means if the position detection part provided in the display means detects that the display means is in a state enabling play. In this way, the holding device can appropriately hold the display means which is held in a cantilevered-state by the connection device in front of the player and is particularly wobbly and unstable.

In addition, by providing the engaged part on the surface of the display means which is opposite of the connection position of the connection rod, the display means is held such as to be sandwiched from both side surfaces, in which one side surface of this display means is supported by the connection rod and the opposing side surface is held by the holding rod. In other words, the display means is held in a concentric state by the connection rod and the holding rod. In this way, vibrations of the display means due to the player's body coming into contact with the display means or the movement of the terminal device can be suppressed appropriately and a problem in which the images become difficult to see due to the swaying of the display means and a problem in which the pressing operation of the touch-panel is difficult can be alleviated.

The present invention is not limited to the foregoing embodiments and includes modifications, improvements and the like which achieve the objects of the present invention.

### Embodiments of the invention

Further embodiments are listed below:
1. A game machine comprising:
   a display means for showing game images generated according to a game program and player input;
   a seat part for enabling the player to sit;
   a storage part which is formed in said seat part, for storing said display means; and
   a connection rod for connecting said display means to said storage part so as to freely enable storage thereof.
2. A game machine comprising:
   a display means for showing game images generated according to a game program and player input;
   an input reception means for receiving input from the player;
   a control means for executing a game program according to a predetermined external input, including input from said input reception means;
   a seat part for enabling the player to sit;
   a storage part which is formed in said seat part, for storing said display means; and
   a connection rod for connecting said display means to said storage part so as to freely enable storage thereof, of which one end fixed to said seat part and the other end is connected to said display means;
   wherein said control means enables said display means to display game images based on the status of the game run by said game program according to said predetermined external input.
3. A game machine comprising:
   a display means for showing game images generated according to a game program and player input;
   an input reception means for receiving input from the player;
   a control means for executing a game program according to a predetermined external input, including input from said input reception means;
   a seat part for enabling the player to sit;
   a storage part which is formed in said seat part, for storing said display means;
   a connection rod for connecting said display means to said storage part so as to freely enable storage thereof, of which one end is fixed to said seat part and the other end is connected to said display means; and
   a movement prohibition means which prohibits the outward movement of said display means stored within said storage part and places said display means in a movement prohibited state;
   wherein said control means enables said movement prohibition means to release said display means from a movement prohibition state, based on the status of the game run by said game program according to said predetermined external input.
4. The game machine according to any of 2 and 3, wherein:
   said input reception means is provided in said display means as a touch panel part; and
   said connection rod comprises a pressing force reduction means for clearing said display means in the pressing force direction when a pressing force stronger than a predetermined pressing force is applied to said touch panel part.
5. The game machine according to 4,
   wherein said pressing force reduction means comprises a sliding part for sliding said connection rod to the side away from the player and a biasing part for biasing said connection rod to the player-side.
6. The game machine according to 4,
   wherein said pressing force reduction means comprises a turning axis for supporting said display means to enable turning and a rotation biasing part for biasing said display means to turn in the direction opposite of the turning direction of the turning caused by said pressing force.
7. A game machine comprising:
   a display means for showing game images generated according to a game program and player input;
   a seat part for enabling the player to sit;
   a storage part which is formed in said seat part, for storing said display means;
   a connection rod for connecting said display means to said storage part so as to freely enable storage thereof; and
   a connection rod driving means for movement-controlling said display means via said connection rod;
   wherein said connection rod driving means automatically moves said display means into a state enabling viewing by the player from a state of being stored within said storage part, by driving said connection rod in accordance with predetermined conditions having been met.
8. A game machine comprising a display means for showing game images generated according to a game program and player input, and a main body part in which an input reception means for receiving input from the player is provided, wherein:
   a storage part for storing said display means is formed in said main body part;
   said display means is provided to freely enable storage within said storage part via a connection device;
   said connection device comprises a connection rod, of which one end is fixed to said main body part and the other end is connected to said display means;
   a connection device driving means for storing said display means into said storage part when a game is not being played, and moving said display means to a predetermined position, into a state enabling play when playing, is connected to said connection device;
   a control means for enabling control of said connection device driving means is provided in said main body part; and
   when an instruction for moving said display means stored within said storage part is received by said input reception means, said control means controls said connection device driving means and moves said display means from said state of being stored within said storage part to said state enabling play.
9. A game machine comprising a display means for showing game images generated according to a game program and player input, and a main body part in which a seat for enabling the player to seat is provided, wherein:
   a storage part for storing said display means is formed in said main body part;
   said display means is provided to freely enable storage within said storage part via a connection device;
   said connection device comprises a connection rod, of which one end is fixed to said main body part and the other end is connected to said display means;
   a connection device driving means for storing said display means into said storage part when a game is not being played, and moving said display means to a predetermined position, into a state enabling play when playing, is connected to said connection device;
   a seating detection part for detecting that the player is seated on said seat and a control means for enabling control of said connection device driving means are provided in said main body part; and
   when said seating detection part detects that the player is seated, said control means controls said connection device driving means and moves said display means from said state of being stored within said storage part to said state enabling play.
10. A game machine comprising a main game machine body, and a terminal device, wherein:
   said terminal device comprises a display means for showing game images generated according to a game program and player input, and a main body part in which an input reception means for receiving input from the player is provided;
   a storage part for storing said display means is formed in said main body part;
   said display means is provided to freely enable storage within said storage part via a connection device;
   said connection device comprises a connection rod, of which one end is fixed to said main body part and the other end is connected to said display means;
   a connection device driving means for storing said display means into said storage part when a game is not being played, and moving said display means to a predetermined position, into a state enabling play when playing, is connected to said connection device;
   a control means for enabling control of said connection device driving means is provided in said main body part; and
   when an instruction for moving said display means stored within said storage part is received by said input reception means, said control means controls said connection device driving means and moves said display means from said state of being stored within said storage part to said state enabling play.
11. A game machine comprising a main game machine body, and a terminal device, wherein:
   said terminal device comprises a display means for showing game images generated according to a game program and player input, and a main body part in which a seat for enabling the player to seat is provided;
   a storage part for storing said display means is formed in said main body part;
   said display means is provided to freely enable storage within said storage part via a connection device;
   said connection device comprises a connection rod, of which one end is fixed to said main body part and the other end is connected to said display means;
   a connection device driving means for storing said display means into said storage part when a game is not being played, and moving said display means to a predetermined position, into a state enabling play when playing, is connected to said connection device;
   a seating detection part for detecting that the player is seated and a control means for enabling control of said connection driving mechanism are provided in said main body part; and
   said control means controls said connection device driving means when said seating detection part detects that the player is seated and moves said display means from said state of being stored within said storage part to said state enabling play.
12. The game machine according to 8 or 10, wherein:
   said control means controls said connection device driving means and stores said display means to said storage part, when an input instructing game termination is received by said input reception means.
13. The game machine according to any of 8 to 11, wherein:
   said terminal device comprises a game medium insertion part for inserting a predetermined game medium and an insertion detection part for detecting that said game medium has been inserted into the game medium insertion part; and
   said control means cannot control said connection device driving means during a normal state and becomes capable of controlling said connection device driving means when said insertion detection part detects the insertion of the game medium.
14. The game machine according to any of 8 to 11, wherein:
   said display means comprises an image display part for showing the game images;
   said connection rod comprises a first axis part for supporting said display means to enable turning, a first arm part, of which one end is connected to said first axis, a second axis part, which is connected to the other end of said first arm part, for supporting said first arm part to enable turning, and a second arm part, of which one end is connected to said second axis part and the other end is fixed to said main body part; and
   said connection device driving means comprises an extending and retracting driving part for extending and retracting said second arm, a turning driving part for turning the first arm part to become a predetermined angle to said second arm part, and a rotation driving part for rotating said display means such that said image display part faces the player-side.
15. The game machine according to any of 8 to 11, wherein:
   said connection device driving means comprises: an operation part for converting air-pressure to mechanic motion and generating driving force; a ventilation pipe for carrying air-pressure to said operation part; a safety valve which is placed in said ventilation pipe, can be opened and closed, and enables reduction in said air-pressure; and a load detection part for detecting the load applied to said connection device driving means; and
   said control means reduces the air-pressure carried to said operation part by open-controlling said safety valve when the load detected by said load detection part is greater than a predetermined load.
16. The game machine according to any of 8 to 11, wherein:
   a position detection part for detecting the position of said display means to the player, is provided in said display means; and
   said control means controls said connection device driving means when said position detection part detects that said display means is not in said state enabling play and movement-controls said display means to said state enabling play.
17. A game machine comprising:
   a display means for showing game images generated according to a game program and player input;
   a seat part for enabling the player to sit;
   a storage part which is formed in said seat part, for storing said display means; and
   a connection rod for connecting said display means to said storage part so as to freely enable storage thereof; and
   a holding rod for holding said display means;
   wherein said connection rod connects in cantilevered-state to one side part of said display part and places said display means in a state enable viewing by the player; and
   said holding rod engages with the other side part opposite of foregoing side part and holds said display means in said state enable viewing.
18. A game machine comprising a display means for showing game images generated according to a game program and player input, and a main body part in which a seat for enabling the player to seat is provided, wherein:
   a storage part for storing said display means is formed in said main body part;
   said display means is provided to freely enable storage within said storage part via a connection device;
   said connection device comprises a connection rod, of which one end is fixed to said main body part and the other end is connected in cantilevered-state to said display means;
   an engaged part is provided in said display means, at a predetermined distance from the connection section of said connection rod;
   a holding device comprising a holding rod, of which one end id fixed to said main body part and the other end is engaged with said engaged part, is provided in said display means;
   a connection device driving means for storing said display means into said storage part, when a game is not being played and moving said display means to a predetermined position, into a state enabling play when playing, is connected to said connection device;
   a holding device driving means for separating said holding rod from said engaged part, when a game is not being played and engaging said holding rod with said engaged part, into a state enabling play when playing, is connected to said connection device.
19. The game machine according to 18, wherein:
   a touch-panel part for receiving player input is provided on the front surface side of said display means.
20. A game machine comprising a main game machine body, and a terminal device, wherein:
   said terminal device comprises a display means for showing game images generated according to a game program and player input, and a main body part in which a seat for enabling the player to seat is provided;
   a storage part for storing said display means is formed in said main body part;
   said display means is provided to freely enable storage within said storage part via a connection device;
   said connection device comprises a connection rod, of which one end is fixed to said main body part and the other end is connected to said display means;
   said connection device comprises a connection rod, of which one end is fixed to said main body part and the other end is connected in a cantilevered-state to said display means;
   an engaged part is provided in said display means, at a predetermined distance from the connection section of said connection rod;
   a holding device comprising a holding rod, of which one end id fixed to said main body part and the other end is engaged with said engaged part, is provided in said display means;
   a connection device driving means for storing said display means into said storage part, when a game is not being played and moving said display means to a predetermined position, into a state enabling play when playing, is connected to said connection device;
   a holding device driving means for separating said holding rod from said engaged part, when a game is not being played and engaging said holding rod with said engaged part, into a state enabling play when playing, is connected to said connection device.
21. The game machine according to 20, wherein:
   a touch-panel part for receiving player input is provided on the front surface side of said display means.
22. The game machine according to any of 18 to 21,
   wherein:
   a position detection part for detecting the position of said display means to the player, is provided on said display means;
   said engaged part is provided in said display means, on the part opposite of the connection section of said connection rod;
   said holding rod is fixed to the side of said main body part which is opposite of the side to which said connection rod is fixed with said seated player therebetween; and
   said control means controls said holding device driving means so as to engage said holding rod with said engage part, when said position detection part detects that said display means is in said state enabling play.

## Claims

1. A game machine comprising:
a display means for showing game images generated according to a game program and player input;
a seat part for enabling the player to sit;
a storage part which is formed in said seat part, for storing said display means;
a connection rod for connecting said display means to said storage part so as to freely enable storage thereof; and
a connection rod driving means for movement-controlling said display means via said connection rod;
wherein said connection rod driving means automatically moves said display means into a state enabling viewing by the player from a state of being stored within said storage part, by driving said connection rod in accordance with predetermined conditions having been met.

2. A game machine comprising according to claim 1, wherein:
an input reception means for receiving input from the player is provided in said seat part,
one end of the connection rod is fixed to said seat part and the other end is connected to said display means;
a control means for enabling control of said connection device driving means is provided in said seat part; and
said control means is formed to control said connection device driving means to move said display means from said state of being stored within said storage part to said state enabling viewing,
when an instruction for moving said display means stored within said storage part is received by said input reception means.

3. A game machine according to claim 1, wherein:
one end of the connection rod is fixed to said seat part and the other end is connected to said display means; wherein
a seating detection part for detecting that the player is seated on said seat is provided in said seat part; and
said control means is formed to control said connection device driving means and to move said display means from said state of being stored within said storage part to said state enabling viewing,
when said seating detection part detects that the player is seated.

4. The game machine according to claim 2, wherein:
said control means is formed to control said connection device driving means and to store said display means to said storage part, when an input instructing game termination is received by said input reception means.

5. The game machine according to any of claims 1 to 4, wherein:
said game machine comprises a game medium insertion part for inserting a predetermined game medium and an insertion detection part for detecting that said game medium has been inserted into the game medium insertion part; and
said control means if formed so that it cannot control said connection device driving means during a normal state and becomes capable of controlling said connection device driving means when said insertion detection part detects the insertion of the game medium.

6. The game machine according to any of claims 1 to 5, wherein:
said display means comprises an image display part for showing the game images;
said connection rod comprises a first axis part for supporting said display means to enable turning, a first arm part, of which one end is connected to said first axis, a second axis part, which is connected to the other end of said first arm part, for supporting said first arm part to enable turning, and a second arm part, of which one end is connected to said second axis part and the other end is fixed to said seat part; and
said connection device driving means comprises an extending and retracting driving part for extending and retracting said second arm, a turning driving part for turning the first arm part to become a predetermined angle to said second arm part, and a rotation driving part for rotating said display means such that said image display part faces the player-side.

7. The game machine according to any of claims 1 to 6, wherein:
said connection device driving means comprises: an operation part for converting air-pressure to mechanic motion and generating driving force; a ventilation pipe for carrying air-pressure to said operation part; a safety valve which is placed in said ventilation pipe, can be opened and closed, and enables reduction in said air-pressure; and a load detection part for detecting the load applied to said connection device driving means; and
said control means is formed to reduce the air-pressure carried to said operation part by open-controlling said safety valve when the load detected by said load detection part is greater than a predetermined load.

8. The game machine according to any of claims 1 to 7, wherein:
a position detection part for detecting the position of said display means to the player, is provided in said display means; and
said control means is formed to control said connection device driving means when said position detection part detects that said display means is not in said state enabling play and movement-controls said display means to said state enabling play.
